# EUROPÄISCHE PATENTANMELDUNG

(11) **EP 3 725 475 A1**
(43) Veröffentlichungstag der Anmeldung: **21.10.2020**
(21) Anmeldenummer: 20169666.3
(22) Anmeldetag: 15.04.2020
(51) Int. Cl.: B26D 3/26

(54) **LEBENSMITTELZERKLEINERUNGSSYSTEM**

(30) Priorität: 17.04.2019 LU 101186
(71) Anmelder: Genius GmbH, 65549 Limburg (DE)
(72) Erfinder: REPAC, Cedomir, 65611 Brechen (DE)
(74) Vertreter: Hoffmann, Jürgen

(57) **Zusammenfassung**

Die Erfindung betrifft ein Lebensmittelzerkleinerungssystem aufweisend eine als Handgerät ausgebildete Lebensmittelzerkleinerungsvorrichtung mit einem Basisteil, das eine Aufnahme für ein Schneidteil aufweist, und mit einem gelenkig mit dem Basisteil verbundenen Betätigungsteil, das zum Hindurchdrücken von zu zerkleinerndem Lebensmittelgut durch ein in die Aufnahme eingesetztes Schneidteil aus einer Einlegestellung gegen das Schneidteil in eine Schließstellung und anschließend von der Schließstellung wieder in die Einlegestellung schwenkbar ist. Das Lebensmittelzerkleinerungssystem zeichnet sich durch ein zusätzliches Zerkleinerungswerkzeug aus, das zerstörungsfrei wieder lösbar an der Lebensmittelzerkleinerungsvorrichtung in einer Arbeitsposition festlegbar ist und das einen Befestigungsabschnitt sowie einen Werkzeugabschnitt aufweist, wobei der Werkzeugabschnitt in der Arbeitsposition außerhalb der Aufnahme und außerhalb des Schwenkbereichs des Betätigungsteils angeordnet ist.

## Beschreibung

Die Erfindung betrifft ein Lebensmittelzerkleinerungssystem aufweisend eine als Handgerät ausgebildete Lebensmittelzerkleinerungsvorrichtung mit einem Basisteil, das eine Aufnahme für ein Schneidteil aufweist, und mit einem gelenkig mit dem Basisteil verbundenen Betätigungsteil, das zum Hindurchdrücken von zu zerkleinerndem Lebensmittelgut durch ein in die Aufnahme eingesetztes Schneidteil aus einer Einlegestellung gegen das Schneidteil in eine Schließstellung und anschließend von der Schließstellung wieder in die Einlegestellung schwenkbar ist.

Aus DE 10 2007 042 660 A1 ist eine als Handgerät ausgebildete Lebensmittelzerkleinerungsvorrichtung bekannt, die zwei Handgriffteile aufweist. An einem Handgriffteil ist ein Pressstempel und an dem anderen Handgriffteil ein Schneidteil angeordnet. Das Schneidteil weist eine Schneidklingenanordnung auf, mittels der das Lebensmittelgut in Spalten geschnitten werden kann. Ähnliche Geräte sind aus US 2014/0190019 A1, DE 102 42 651 A1 und aus EP 1 874 508 B1 bekannt. Die Einsatzmöglichkeiten derartiger Lebensmittelzerkleinerungsvorrichtungen sind begrenzt.

Aus DE 20 2009 011 687 U1 ist ein Küchenhobel bekannt, der ein Schneidteil mit einer Gleitbahn zum Verschieben eines zu zerkleinernden Schneidguts, insbesondere Gemüse oder Obst, aufweist. Das Schneidteil weist wenigstens eine Klinge auf, die an der Gleitbahn derart angeordnet ist, daß sie vom Schneidgut während seiner Verschiebung Schneidgutteile abschneidet. Der Küchenhobel weist ferner ein Schneidgitter sowie eine Drückeinrichtung auf, die dazu ausgelegt ist, Schneidgutteile zu ihrer weiteren Zerkleinerung durch das Schneidgitter zu drücken.

Aus DE 20 2017 107 348 U1 ist eine Vorrichtung zum Zerkleinern von Lebensmitteln mit einem Basisteil, das eine Aufnahme für ein Schneidteil aufweist, und mit einem Betätigungsteil, das gelenkig mit dem Basisteil verbunden ist und das gegen das Basisteil schwenkbar ist, um zu zerkleinerndes Gut entlang einer Durchdrückrichtung durch ein in die Aufnahme eingesetztes Schneidteil zu drücken, bekannt. Es sind bei dieser Vorrichtung mehrere Schneidteile vorhanden, wobei die Aufnahme dazu ausgebildet ist, wenigstens zwei Schneidteile übereinander aufzunehmen, so dass zu zerkleinerndes Gut mittels einer Schwenkbewegung des Betätigungsteils gegen das Basisteil durch die übereinander in der Aufnahme angeordneten Schneidteile hindurch drückbar ist, wobei die zwei Schneidteile mit unterschiedlichen Drehausrichtungen relativ zueinander in der Aufnahme anordenbar sind.

Aus US 2,661,039 ist eine Gemüseschneidvorrichtung bekannt, die ein Schneidgitter aufweist. Es ist ein Pressstempel vorhanden, mittels dem zu zerkleinerndes Gemüse durch das Schneidgitter hindurch in eine Auffangkammer gedrückt werden kann, um Stifte mit einer quadratischen Querschnittsform zu schneiden. Die in der Auffangkammer aufgefangenen Stifte können anschließend mit plattenartigen und zueinander parallel angeordneten Schneidklingen, die seitlich in die Auffangkammer geschoben werden können, weiter zerteilt werden.

Es ist daher die Aufgabe der vorliegenden Erfindung, ein Lebensmittelzerkleinerungssystem anzugeben, das flexibel einsetzbar ist und weitere Einsatzmöglichkeiten bietet.

Die Aufgabe wird durch ein Lebensmittelzerkleinerungssystem der eingangs genannten Art gelöst, das gekennzeichnet ist durch ein zusätzliches Zerkleinerungswerkzeug, das zerstörungsfrei wieder lösbar an der Lebensmittelzerkleinerungsvorrichtung in einer Arbeitsposition festlegbar ist und das einen Befestigungsabschnitt sowie einen Werkzeugabschnitt aufweist, wobei der Werkzeugabschnitt in der Arbeitsposition außerhalb der Aufnahme und außerhalb des Schwenkbereichs des Betätigungsteils angeordnet ist.

Die Erfindung bietet durch das an die Lebensmittelzerkleinerungsvorrichtung ankoppelbare, zusätzliche Zerkleinerungswerkzeug den ganz besonderen Vorteil, dass auch solche Lebensmittel zerkleinert werden können, die nach dem Prinzip des Hindurchdrückens durch ein Schneidgitter gar nicht oder nicht ohne ein vorheriges Zerteilen in passende Stücke zerkleinert werden können. Beispielsweise kann eine vollständige Gurke oder eine vollständige Zucchini mittels eines als Hobel oder als Reibe ausgebildeten zusätzlichen Zerkleinerungswerkzeugs ohne weiteres zerkleinert werden, ohne dass diese zuvor in Stücke geschnitten werden muss.

Außerdem hat die Erfindung den ganz besonderen Vorteil, dass dem Benutzer zusätzlich zu der Zerkleinerungsart nach Prinzip des Hindurchdrückens durch ein Schneidgitter andere Zerkleinerungsarten, wie beispielsweise Reiben oder Hobeln, zur Verfügung gestellt werden können.

Die Ankoppelbarkeit des zusätzlichen Zerkleinerungswerkzeugs an der Lebensmittelzerkleinerungsvorrichtung kann auf ganz unterschiedliche Weise realisiert sein. Von ganz besonderem Vorteil sind insbesondere diejenigen Ausführungen, bei denen das zusätzliche Zerkleinerungswerkzeug an der Lebensmittelzerkleinerungsvorrichtung festlegbar ist, ohne dass das Basisteil und/oder das Betätigungsteil hierfür zuvor verändert oder voneinander getrennt werden müssen.

Nach einem eigenständigen Erfindungsgedanken kann das zusätzliche Zerkleinerungswerkzeug vorteilhaft einen Befestigungsabschnitt sowie einen Werkzeugabschnitt aufweisen. Insbesondere kann vorteilhaft vorgesehen sein, dass der Befestigungsabschnitt in der Arbeitsposition formschlüssig zwischen dem Basisteil und dem Betätigungsteil eingeklemmt ist, wobei vorzugsweise der Werkzeugabschnitt in der Arbeitsposition außerhalb der Aufnahme angeordnet ist.

Bei einer vorteilhaften Ausführung weist das Betätigungsteil oder das Basisteil ein Gegenbefestigungsmittel auf, das dazu ausgebildet und bestimmt ist, mit dem Befestigungsabschnitt des zusätzlichen Zerkleinerungswerkzeugs zusammen zu wirken, um das zusätzliche Zerkleinerungswerkzeug in der Arbeitsposition an dem Betätigungsteil oder an dem Basisteil festzulegen. Das Gegenbefestigungsmittel kann vorteilhaft beispielsweise auf der dem Basisteil abgewandten Außenseite des Betätigungsteils angeordnet sein. Das Gegenbefestigungsmittel kann jedoch auch an einer anderen Stelle des Betätigungsteils oder an dem Basisteil angeordnet sein.

Beispielsweise kann vorteilhaft vorgesehen sein, dass der Befestigungsabschnitt des zusätzlichen Zerkleinerungswerkzeugs und das Gegenbefestigungsmittel gemeinsam eine Bajonettverbindung bilden. Bei einer besonderen Ausführung wird zum Ankoppeln ein Bajonettvorsprung des Befestigungsabschnitts des zusätzlichen Zerkleinerungswerkzeugs in eine Bajonettaufnahme des Gegenbefestigungsmittels eingeführt und anschließend eine Relativdrehung, beispielsweise um einen Winkel im Bereich von 20 bis 180 Grad, des zusätzlichen Zerkleinerungswerkzeugs relativ zu der Lebensmittelzerkleinerungsvorrichtung ausgeführt, wodurch Gewindeabschnitte des Bajonettvorsprungs und der Bajonettaufnahme in Wirkverbindung treten und eine feste Verbindung hergestellt wird. Um das zusätzliche Zerkleinerungswerkzeug wieder von der Lebensmittelzerkleinerungsvorrichtung zu lösen, muss der Benutzer das zusätzliche Zerkleinerungswerkzeug wieder relativ zu der Lebensmittelzerkleinerungsvorrichtung drehen und kann dann den Bajonettvorsprung des Befestigungsabschnitts wieder aus der Bajonettaufnahme des Gegenbefestigungsmittels heraus nehmen.

Bei einer besonders vorteilhaften Ausführung weist das Gegenbefestigungsmittel wenigstens eine, insbesondere längliche, Ausnehmung auf, während der Befestigungsabschnitt wenigstens einen, insbesondere länglichen, Träger aufweist, der dazu ausgebildet und bestimmt ist, formschlüssig in die Ausnehmung eingeführt zu werden, um das zusätzliche Zerkleinerungswerkzeug in der Arbeitsposition festzulegen. Insbesondere kann vorteilhaft vorgesehen sein, dass das Gegenbefestigungsmittel genau zwei längliche und zueinander parallele, Ausnehmungen aufweist, in die der durch zwei längliche Träger gebildete Befestigungsabschnitt des zusätzlichen Zerkleinerungswerkzeugs eingesteckt werden kann, um das zusätzliche Zerkleinerungswerkzeug an der Lebensmittelzerkleinerungsvorrichtung festzulegen. Um das zusätzliche Zerkleinerungswerkzeug wieder von der Lebensmittelzerkleinerungsvorrichtung zu lösen, muss der Benutzer lediglich die Träger wieder aus den Ausnehmungen herausziehen.

Bei einer ganz besonders vorteilhaften Ausführung wird, wie bereits erwähnt, der Befestigungsabschnitt in der Arbeitsposition formschlüssig zwischen dem Basisteil und dem Betätigungsteil eingeklemmt, um das zusätzliche Zerkleinerungswerkzeug an der Lebensmittelzerkleinerungsvorrichtung festzulegen.

Hierbei kann vorteilhaft insbesondere vorgesehen sein, dass der Befestigungsabschnitt, insbesondere formschlüssig und/oder verrastend, in die Aufnahme einfügbar ist. Eine formschlüssige Einfügbarkeit des Befestigungsabschnitts trägt zu einer sicheren und wackelfreien Verankerung in der Arbeitsposition bei.

Alternativ oder zusätzlich kann vorteilhaft auch vorgesehen sein, dass der Befestigungsabschnitt anstelle eines Schneidteils, insbesondere formschlüssig und/oder verrastend, in die Aufnahme eingefügt wird, um das zusätzliche Zerkleinerungswerkzeug an der Lebensmittelzerkleinerungsvorrichtung festzulegen.

Eine ganz besonders sichere und zuverlässige Ankopplung des zusätzlichen Zerkleinerungswerkzeugs ist bei einer Ausführung erreicht, bei der der Befestigungsabschnitt einen in die Aufnahme des Basisteils einfügbaren Rahmen aufweist, in den ein Pressstempel des Betätigungsteils in der Arbeitsposition, insbesondere formschlüssig, eingreift. Zum Herbeiführen der Arbeitsposition wird bei dieser Ausführung der Befestigungsabschnitt des zusätzlichen Zerkleinerungswerkzeugs anstelle eines Schneidteils in die Aufnahme eingesetzt, während sich das Betätigungsteil in der Einlegestellung befindet. Anschließend wird das Betätigungsteil in die Schließstellung überführt. Hierdurch wird der Befestigungsabschnitt formschlüssig zwischen dem Basisteil und dem Betätigungsteil eingeklemmt.

Um das zusätzliche Zerkleinerungswerkzeug wieder von der Lebensmittelzerkleinerungsvorrichtung zu lösen, muss der Benutzer bei dieser Ausführung lediglich das Betätigungsteil von der Schließstellung zurück in die Einlegstellung schwenken, so dass der rahmenförmig ausgebildete Befestigungsabschnitt wieder aus der Aufnahme entnommen werden kann.

Die Lebensmittelzerkleinerungsvorrichtung weist insbesondere bei einer solchen Ausführung, vorteilhaft eine Arretiervorrichtung auf, mittels der das Basisteil und das Betätigungsteil in der Schließstellung relativ zueinander arretiert werden können. Die Arretiervorrichtung hat den ganz besonderen Vorteil, dass der Benutzer das Basisteil und das Betätigungsteil nicht permanent mit einer Hand in der Schließstellung halten muss, um sicherzustellen, dass der Befestigungsabschnitt zwischen dem Basisteil und dem Betätigungsteil eingeklemmt bleibt. Die Arretiervorrichtung kann beispielsweise einen Bedienknopf aufweisen, mittels dem zwischen einer Arretierstellung und einer Freigabestellung umgeschaltet werden kann. Auf diese Weise kann der Benutzer die Arretiervorrichtung mittels des Bedienknopfes in einer Arretierposition überführen, die bewirkt, dass das Basisteil und das Betätigungsteil in der Einlegestellung relativ zueinander arretiert sind und sich der Befestigungsabschnitt nicht ungewollt lösen kann.

Ganz allgemein hat eine solche Arretiervorrichtung den weiteren Vorteil, dass das Basisteil und das Betätigungsteil in der Schließstellung relativ zueinander arretiert werden können, beispielsweise wenn die Lebensmittelzerkleinerungsvorrichtung in einer Schublade verstaut werden soll. Auf diese Weise ist vermieden, dass sich die Lebensmittelzerkleinerungsvorrichtung ungewollt öffnet und sich störend innerhalb der Schublade und/oder mit anderen Geräten verkeilt.

Das zusätzliche Zerkleinerungswerkzeug kann vorteilhaft insbesondere als Hobel oder als Reibe ausgebildet sein. Alternativ kann vorteilhaft vorgesehen sein, dass das zusätzliche Zerkleinerungswerkzeug in der Arbeitsposition zusammen mit wenigstens einem Bauteil der Lebensmittelzerkleinerungsvorrichtung einen Hobel oder eine Reibe bildet.

Bei einer ganz besonders vorteilhaften bildet das zusätzliche Zerkleinerungswerkzeug in der Arbeitsposition zusammen mit wenigstens einem Bauteil der Lebensmittelzerkleinerungsvorrichtung einen Hobel oder eine Reibe, wobei insbesondere vorteilhaft vorgesehen sein kann, dass die Lebensmittelzerkleinerungsvorrichtung eine Gleitbahn oder wenigstens einen Teil der Gleitbahn des Hobels oder der Reibe bereitstellt, entlang der ein mittels des Hobels oder der Reibe zu zerkleinerndes Lebensmittelgut hin und her führbar ist. Beispielsweise kann eine, insbesondere von dem Basisteil abgewandte, Außenseite des Betätigungsteils die Gleitbahn oder einen Teil der Gleitbahn aufweisen.

Bei einer vorteilhaften Ausführung weist das zusätzliche Zerkleinerungswerkzeug eine weitere Aufnahme auf, in die ein Schneid- oder Reibeinsatz, insbesondere zerstörungsfrei wieder lösbar und/oder verrastend, einfügbar ist. Das zusätzliche Zerkleinerungswerkzeug fungiert bei dieser Ausführung je nach verwendetem Schneid- oder Reibeinsatz als Hobel oder als Reibe. Insbesondere kann das Lebensmittelzerkleinerungssystem mehrere unterschiedliche Schneid- oder Reibeinsätze aufweisen, von denen wahlweise jeweils einer in die weitere Aufnahme eingefügt werden kann. Ein Schneid- oder Reibeinsatz kann beispielsweise wenigsten ein, insbesondere genau ein, Hobelmesser aufweisen. Es ist beispielsweise auch möglich, dass ein Schneid- oder Reibeinsatz mehrere Julienne-Messer oder mehrere Reibvorsprünge aufweist.

In ganz besonders vorteilhafter Weise kann die Lebensmittelzerkleinerungsvorrichtung eine Ankoppelvorrichtung zum Ankoppeln eines Behälters aufweisen. Insbesondere kann ein Behälter mittels der Ankoppelvorrichtung derart ankoppelbar sein, dass mittels der Lebensmittelzerkleinerungsvorrichtung zerkleinertes Lebensmittelgut automatisch von dem angekoppelten Behälter aufgefangen wird. Eine solche Ausführung hat den ganz besonderen Vorteil, dass das mittels der Lebensmittelzerkleinerungsvorrichtung zerkleinerte Lebensmittelgut nach dem Zerkleinerungsvorgang in dem Behälter sofort zur Aufbewahrung oder zur Weiterverarbeitung transportiert werden kann.

Ganz besonders vorteilhaft ist eine Ausführung, bei der das zusätzliche Zerkleinerungswerkzeug eine weitere Ankoppelvorrichtung zum Ankoppeln eines Behälters aufweist. Vorzugsweise ist die weitere Ankoppelvorrichtung derart ausgebildet, dass ein Behälter unmittelbar an das zusätzliche Zerkleinerungswerkzeug angekoppelt werden kann, so dass mittels des zusätzlichen Zerkleinerungswerkzeugs zerkleinertes Lebensmittelgut automatisch von dem angekoppelten Behälter aufgefangen wird. Eine solche Ausführung hat den ganz besonderen Vorteil, dass das mittels des zusätzlichen Zerkleinerungswerkzeugs zerkleinerte Lebensmittelgut nach dem Zerkleinerungsvorgang in dem Behälter sofort zur Aufbewahrung oder zur Weiterverarbeitung transportiert werden kann.

Bei einer ganz besonders vorteilhaften Ausführung sind die Ankoppelvorrichtung und die weitere Ankoppelvorrichtung gleich ausgebildet. Ein solches Lebensmittelzerkleinerungssystem hat daher den ganz besonderen Vorteil, dass ein Behälter wahlweise an der Ankoppelvorrichtung oder an der weiteren Ankoppelvorrichtung angekoppelt werden kann. Auf diese Weise kann das Lebensmittelzerkleinerungssystem mit einem einzigen Behälter auskommen. Bei einer solchen Ausführung wird der Behälter in Abhängigkeit davon, ob gerade Lebensmittelgut mittels der Lebensmittelzerkleinerungsvorrichtung oder mittels des zusätzlichen Zerkleinerungswerkzeugs zerkleinert wird, entweder an der Ankoppelvorrichtung oder an der weiteren Ankoppelvorrichtung angekoppelt. Vorzugsweise sind jedoch mehrere Behälter vorhanden, von denen jeder wahlweise an der Ankoppelvorrichtung oder an der weiteren Ankoppelvorrichtung angekoppelt werden kann. Die Behälter sind hierzu wenigstens im Ankopplungsbereich gleich ausgebildet. Insbesondere können mehrere Behälter mit unterschiedlichem Fassungsvermögen vorhanden sein, die vorzugsweise jedoch im Ankopplungsbereich gleich ausgebildet sind, um diese wahlweise an der Ankoppelvorrichtung der Lebensmittelzerkleinerungsvorrichtung oder an der weiteren Ankoppelvorrichtung des zusätzlichen Zerkleinerungswerkzeugs festlegen zu können.

Die Lebensmittelzerkleinerungsvorrichtung kann vorteilhaft als Handgerät ausgebildet sein. Eine solche Ausführung kann besonders kompakt ausgebildet werden und nimmt wenig Stauraum in Anspruch, wenn sie nicht gebraucht wird. Insbesondere kann die Lebensmittelzerkleinerungsvorrichtung vorteilhaft als ein Handgerät ausgebildet und dazu ausgebildet und bestimmt sein, bei einem Zerkleinerungsvorgang, insbesondere ohne Abstellen auf einer Arbeitsfläche, in der Hand oder in den Händen gehalten zu werden. Insbesondere hierzu kann vorteilhaft vorgesehen sein, das Basisteil ein erstes Handgriffteil aufweist und das Betätigungsteil ein zweites Handgriffteil aufweist, die beide mit den Fingern einer Hand gemeinsam umgreifbar und, insbesondere zangenartig, gegeneinander drückbar angeordnet sind.

Das zusätzliche Zerkleinerungswerkzeug kann vorteilhaft einen Aufstellfuß aufweisen, mittels dem das Zerkleinerungswerkzeug bei einem Zerkleinerungsvorgang, bei dem ein zu zerkleinerndes Lebensmittelgut mit einer Hand über die Gleitbahn hin- und hergeführt wird, an einer Arbeitsfläche abgestützt werden kann, während die in der Schließstellung befindliche Lebensmittelzerkleinerungsvorrichtung gleichzeitig mit der anderen Hand frei gehalten wird.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1 bis 6: ein erstes Ausführungsbeispiel eines erfindungsgemäßen Lebensmittelzerkleinerungssystems,
- Fig. 7 bis 12: ein zweites Ausführungsbeispiel eines erfindungsgemäßen Lebensmittelzerkleinerungssystems,
- Fig. 13 bis 17: ein drittes Ausführungsbeispiel eines erfindungsgemäßen Lebensmittelzerkleinerungssystems, und
- Fig. 18 bis 22: ein viertes Ausführungsbeispiel eines erfindungsgemäßen Lebensmittelzerkleinerungssystems.

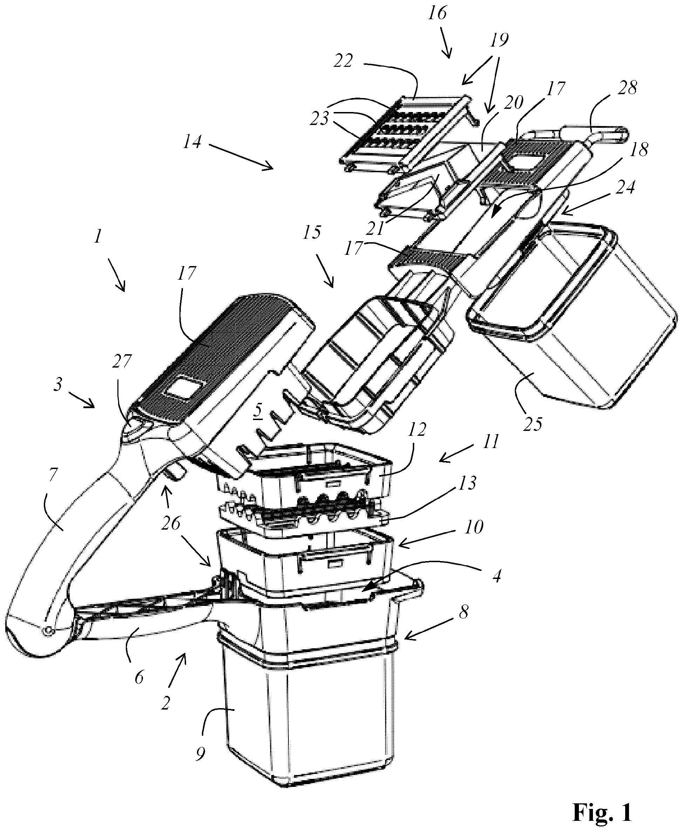

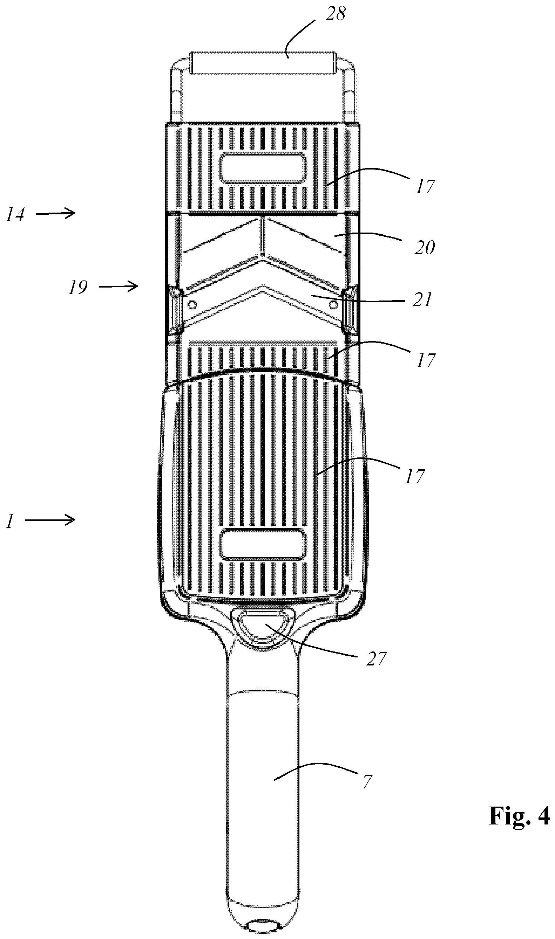

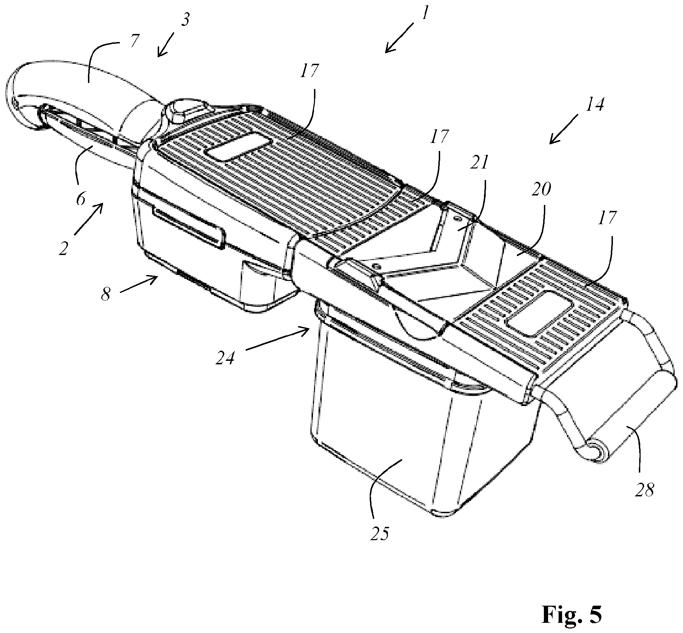

Die Figuren 1 bis 6 zeigen ein erstes Ausführungsbeispiel eines erfindungsgemäßen Lebensmittelzerkleinerungssystems, das eine Lebensmittelzerkleinerungsvorrichtung 1 mit einem Basisteil 2 und einem Betätigungsteil 3 aufweist.

Das Basisteil 2 weist eine Aufnahme 4 für ein Schneidteil 10, 11 auf. Das Betätigungsteil 3 hat einen Pressstempel 5 und ist gelenkig mit dem Basisteil 2 verbunden. Das Betätigungsteil 3 kann zum Hindurchdrücken von zu zerkleinerndem Lebensmittelgut durch das Schneidteil 10, 11 aus einer Einlegestellung gegen das Schneidteil 10, 11 in eine Schließstellung und anschließend von der Schließstellung wieder in die Einlegestellung geschwenkt werden.

Die Lebensmittelzerkleinerungsvorrichtung 1 ist als Handgerät ausgebildet, so dass sie bei einem Zerkleinerungsvorgang, bei dem das Betätigungsteil 3 in die Schließstellung gegen das Basisteil 2 gedrückt wird, in einer Hand oder in zwei Händen gehalten werden kann.

Das Basisteil 2 weist ein erstes Handgriffteil 6 auf, während das Betätigungsteil 3 ein zweites Handgriffteil 7 aufweist. Das erste Handgriffteil 6 und das zweite Handgriffteil 7 können bei einem Zerkleinerungsvorgang mit den Fingern einer Hand gemeinsam umgriffen werden, so dass das erste Handgriffteil 6 und das zweite Handgriffteil 7 zangenartig gegeneinandergedrückt werden können.

Die Lebensmittelzerkleinerungsvorrichtung 1 weist eine Ankoppelvorrichtung 8 zum Ankoppeln eines Behälters 9 auf. Der Behälter 9 kann mittels der Ankoppelvorrichtung 8 derart angekoppelt werden, dass das durch das Schneidteil 10, 11 hindurch gedrückte, zerkleinerte Lebensmittelgut automatisch von dem angekoppelten Behälter 9 aufgefangen wird. Der Behälter 9 kann werkzeugfrei und zerstörungsfrei abgenommen und beispielsweise nach einem Entleerungsvorgang wieder angekoppelt werden. Hierzu weist die Ankoppelvorrichtung 8 eine (nicht näher dargestellte) Rastvorrichtung auf.

Die Lebensmittelzerkleinerungsvorrichtung 1 kann ganz unterschiedliche Schneideinsätze 10, 11 beinhalten.

In dem dargestellten Ausführungsbeispiel kann wahlweise entweder ein Einzel-Schneidteil 10 oder ein Kombinations-Schneidteil 11 in die Aufnahme 4 eingesetzt werden. Es können alternativ oder zusätzlich jedoch auch andersartige Schneideinsätze vorhanden sein.

Der Einzel-Schneidteil 10 weist (in dieser Figur nicht sichtbare) von einem Halterahmen getragene Schneidklingen auf, die sich in einem Mittelpunkt kreuzen. Mit dem Einzel-Schneidteil 10 kann ein Lebensmittelgut in keilförmige Spalten geschnitten werden.

Alternativ kann auch ein Kombinations-Schneidteil 11, der aus einem oberen Teil 12 und einem unteren Teil 13 besteht, in die Aufnahme 4 eingesetzt werden. Der Kombinations-Schneidteil 11 zeichnet sich dadurch aus, dass der obere Teil 12 und der untere Teil 13 jeweils zueinander parallele Schneidklingen aufweisen. Die Schneidklingen des oberen Teils 12 sind parallel zueinander ausgerichtet. Auch die Schneidklingen des unteren Teils 13 sind parallel zueinander ausgerichtet. Sowohl der obere Teil 12, als auch der untere Teil 13 weisen jeweils einen Halterahmen auf, der die Schneidklingen trägt. Die Halterahmen sind mit Vorsprüngen und Einbuchtungen versehen, die es erlauben, die Halterahmen formschlüssig aufeinander setzten zu können. Auf diese Weise ist verhindert, dass sich die Halterahmen ungewollt gegeneinander verschieben.

Der obere Teil 12 und der untere Teil 13 können zum Schneiden eines Lebensmittelgutes in feine Scheiben mit gleich ausgerichteten Schneidklingen übereinander in der Aufnahme angeordnet werden. Alternativ ist es auch möglich, den oberen Teil 12 und den unteren Teil 13 um 90 Grad zueinander gedreht, also mit einer gekreuzten Anordnung der Schneidklingen, in die Aufnahme einzufügen, um ein Lebensmittelgut in im Querschnitt quadratische Stifte schneiden zu können.

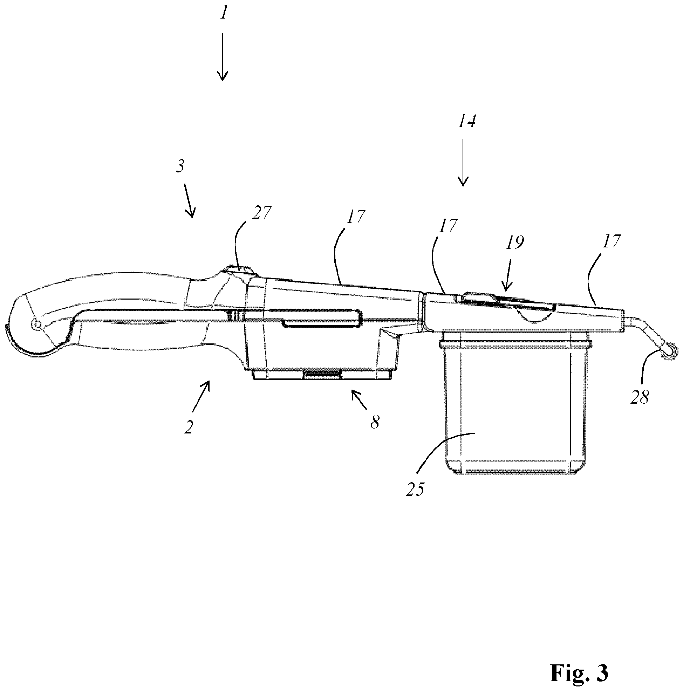

Das Lebensmittelzerkleinerungssystem weist außerdem ein zusätzliches Zerkleinerungswerkzeug 14 auf, das an der Lebensmittelzerkleinerungsvorrichtung 1 in einer (in den Figuren 3, 4 und 5 näher dargestellten) Arbeitsposition festlegbar ist und das einen Befestigungsabschnitt 15 sowie einen Werkzeugabschnitt 16 aufweist.

Zum Herbeiführen der Arbeitsposition wird der Befestigungsabschnitt 15 anstelle eines der Schneidteile 10, 11 in die Aufnahme 4 eingesetzt und das Betätigungsteil 3 in die Schließstellung überführt. Hierdurch wird der Befestigungsabschnitt 15 formschlüssig zwischen dem Basisteil 2 und dem Betätigungsteil 3 eingeklemmt, wobei der Werkzeugabschnitt 16 in der Arbeitsposition außerhalb der Aufnahme 4 angeordnet ist.

Um das zusätzliche Zerkleinerungswerkzeug 14 wieder von der Lebensmittelzerkleinerungsvorrichtung 1 zu lösen, muss der Benutzer lediglich das Betätigungsteil 3 von der Schließstellung zurück in die Einlegstellung schwenken, so dass der rahmenförmig ausgebildete Befestigungsabschnitt 15 wieder aus der Aufnahme 4 entnommen werden kann.

Die Lebensmittelzerkleinerungsvorrichtung 1 weist eine Arretiervorrichtung 26 auf, mittels der das Basisteil 2 und das Betätigungsteil 3 in der Schließstellung relativ zueinander arretiert werden können. Die Arretiervorrichtung 26 weist einen Bedienknopf 27 auf, mittels dem zwischen einer Arretierstellung und einer Freigabestellung umgeschaltet werden kann. Die Arretiervorrichtung 26 hat den ganz besonderen Vorteil, dass der Benutzer das erste Handgriffteil 6 und das zweite Handgriffteil 7 nicht permanent mit einer Hand geschlossen halten muss, um sicherzustellen, dass der Befestigungsabschnitt 15 zwischen dem Basisteil 2 und dem Betätigungsteil 3 eingeklemmt bleibt. Vielmehr kann der Benutzer die Arretiervorrichtung 26 mittels des Bedienknopfes 27 in einer Arretierposition überführen, die bewirkt, dass das Basisteil 2 und das Betätigungsteil 3 in der Einlegestellung relativ zueinander arretiert sind und sich der Befestigungsabschnitt 15 nicht ungewollt lösen kann.

Der Befestigungsabschnitt 15 könnte (anders als bei der dargestellten Ausführung) zusätzlich auch als ein Schneidteil ausgebildet sein und Schneidklingen aufweisen, so dass die Lebensmittelzerkleinerungsvorrichtung 1 auch mit dem als weiteres Schneidteil fungierenden Befestigungsabschnitt 15 betrieben werden könnte.

Das zusätzliche Zerkleinerungswerkzeug 14 bildet in der (insbesondere in den Figuren 3 bis 5 dargestellten) Arbeitsposition zusammen mit einem Bauteil der Lebensmittelzerkleinerungsvorrichtung 1 einen Hobel oder eine Reibe. Die Lebensmittelzerkleinerungsvorrichtung 1 stellt einen Teil einer Gleitbahn 17 des Hobels oder der Reibe bereit. Ein weiterer Teil der Gleitbahn 17 ist Bestandteil des Werkzeugabschnitts 16.

Das zusätzliche Zerkleinerungswerkzeug 14 weist im Bereich des Werkzeugabschnitts 16 eine weitere Aufnahme 18 auf, in die ein Schneid- oder Reibeinsatz, insbesondere zerstörungsfrei wieder lösbar und/oder verrastend, eingefügt werden kann. Der Schneid- oder Reibeinsatz 19 kann beispielsweise als Hobeleinsatz 20 ausgebildet sein, der ein Hobelmesser 21 aufweist. Der Schneid- oder Reibeinsatz 19 kann beispielsweise auch als Julienne-Einsatz 22 ausgebildet sein, der eine Vielzahl von Julienne-Messern 23 aufweist. Der Schneid- oder Reibeinsatz kann beispielsweise auch eine Vielzahl von Reibvorsprüngen aufweisen.

In der Arbeitsposition kann ein zu zerkleinerndes Lebensmittelgut entlang der Gleitbahn 17 hin und her bewegt werden, so dass das zu zerkleinerndes Lebensmittelgut fortlaufend immer wieder über den Schneid- oder Reibeinsatz 19 geführt wird und so sukzessive zerkleinert wird.

Das zusätzliche Zerkleinerungswerkzeug 14 weist eine weitere Ankoppelvorrichtung 24 zum Ankoppeln eines weiteren Behälters 25 auf. Der weitere Behälter 25 kann mittels der weiteren Ankoppelvorrichtung 24 derart angekoppelt werden, dass mittels des zusätzlichen Zerkleinerungswerkzeugs 14 zerkleinertes Lebensmittelgut automatisch von dem angekoppelten weiteren Behälter 25 aufgefangen wird. Die weitere Ankoppelvorrichtung 24 ist vorzugsweise derart ausgebildet, dass der weitere Behälter 25 werkzeugfrei und jeweils zerstörungsfrei an- und abgekoppelt werden kann. Hierzu ist vorzugsweise eine Rastvorrichtung vorhanden.

Die Ankoppelvorrichtung 8 und die weitere Ankoppelvorrichtung 24 sind gleich ausgebildet. Ebenso sind der Behälter 9 und der weitere Behälter 25 gleich ausgebildet. Das dargestellte Lebensmittelzerkleinerungssystem hat daher den ganz besonderen Vorteil, dass der Behälter 9 wahlweise auch an der weiteren Ankoppelvorrichtung 24 angekoppelt werden kann und/oder dass der weitere Behälter 25 wahlweise auch an der Ankoppelvorrichtung 8 angekoppelt werden kann. Es ist auch möglich, dass insgesamt nur ein einziger Behälter 9, 25 verwendet wird, wobei dieser in Abhängigkeit davon, ob gerade Lebensmittelgut mittels der Lebensmittelzerkleinerungsvorrichtung 1 oder mittels des zusätzlichen Zerkleinerungswerkzeugs 14 zerkleinert wird, entweder an der Ankoppelvorrichtung 8 oder an der weiteren Ankoppelvorrichtung 24 angekoppelt wird.

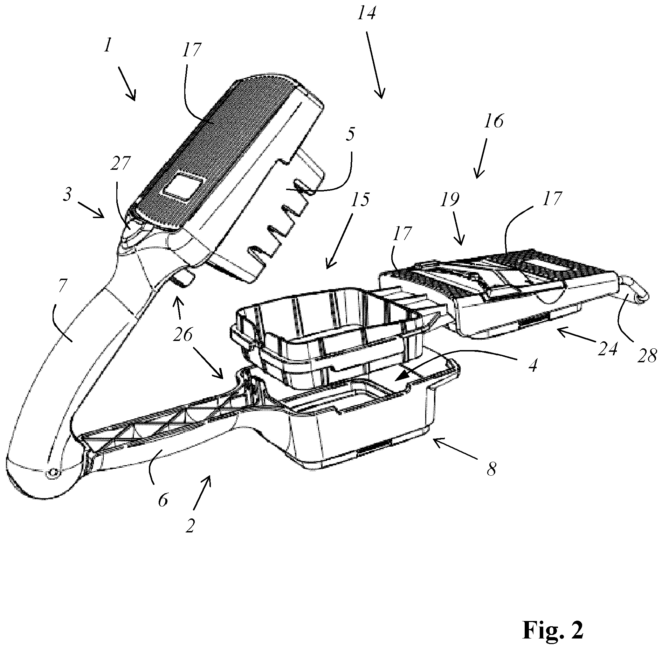

Figur 2 zeigt Teile des erfindungsgemäßen Lebensmittelzerkleinerungssystems bei dem Vorgang des Herbeiführens der Arbeitsposition. In die Aufnahme 4 der Lebensmittelzerkleinerungsvorrichtung 1 ist kein Schneidteil 10, 11 eingesetzt. Stattdessen wird zur Herbeiführung der Arbeitsposition der Befestigungsabschnitt 15 des zusätzlichen Zerkleinerungswerkzeugs 14 in die Aufnahme 4 eingefügt, während sich das Betätigungsteil 3 in der Einlegestellung befindet. Anschließend wird das Betätigungsteil 3 in die Schließstellung überführt, so dass der rahmenförmig ausgebildete Befestigungsabschnitt 15 formschlüssig zwischen der Wandung der Aufnahme 4 und dem Pressstempel 5 des Betätigungsteils 3 gehalten ist, was in den Figuren 3 bis 5 dargestellt ist.

Die Figuren 3 bis 5 zeigen in einer Seitenansicht, einer Ansicht von oben und in einer perspektivischen Darstellung die Lebensmittelzerkleinerungsvorrichtung 1 mit dem angekoppelten zusätzlichen Zerkleinerungswerkzeug 14. Es ist deutlich zu erkennen, dass das Betätigungsteil 3 mit seiner Oberseite einen Teil der Gleitbahn 17 bereitstellt, entlang der ein zu zerkleinerndes Lebensmittelgut hin und her geführt werden kann.

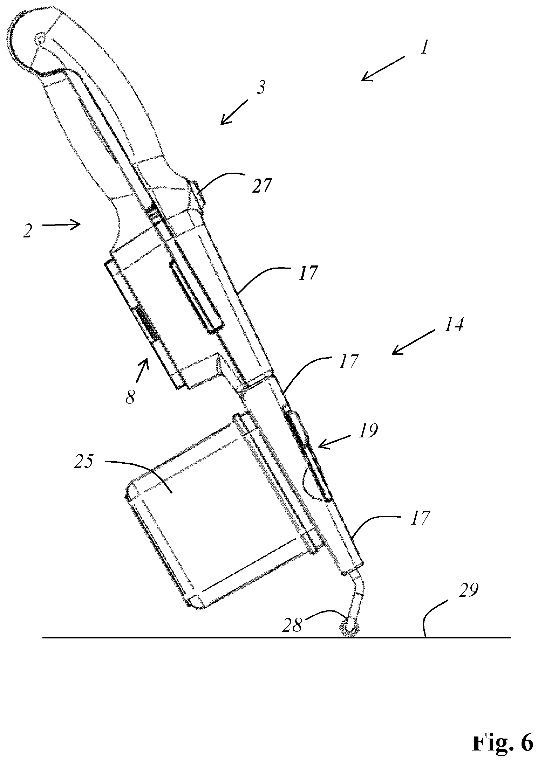

Das zusätzliche Zerkleinerungswerkzeug 14 weist an seinem, dem Befestigungsabschnitt 15 abgewandten Ende einen bügelartig ausgebildeten Aufstellfuß 28 auf, der bei einem Zerkleinerungsvorgang, bei dem ein zu zerkleinerndes Lebensmittelgut mit einer Hand über die Gleitbahn 17 hin- und hergeführt wird, auf eine Arbeitsfläche 29, beispielsweise einer Tischplatte, aufgelegt werden kann, während die in der Schließstellung befindliche Lebensmittelzerkleinerungsvorrichtung 1 gleichzeitig mit der anderen Hand frei gehalten wird, was in Figur 6 dargestellt ist.

Das zusätzliche Zerkleinerungswerkzeug 14 ist zerstörungsfrei wieder lösbar an der Lebensmittelzerkleinerungsvorrichtung 1 in einer Arbeitsposition festlegbar, wobei der Werkzeugabschnitt 16 in der Arbeitsposition außerhalb der Aufnahme 4 und außerhalb des Schwenkbereichs des gelenkig mit dem Basisteil 2 verbundenen Betätigungsteils 3 angeordnet ist.

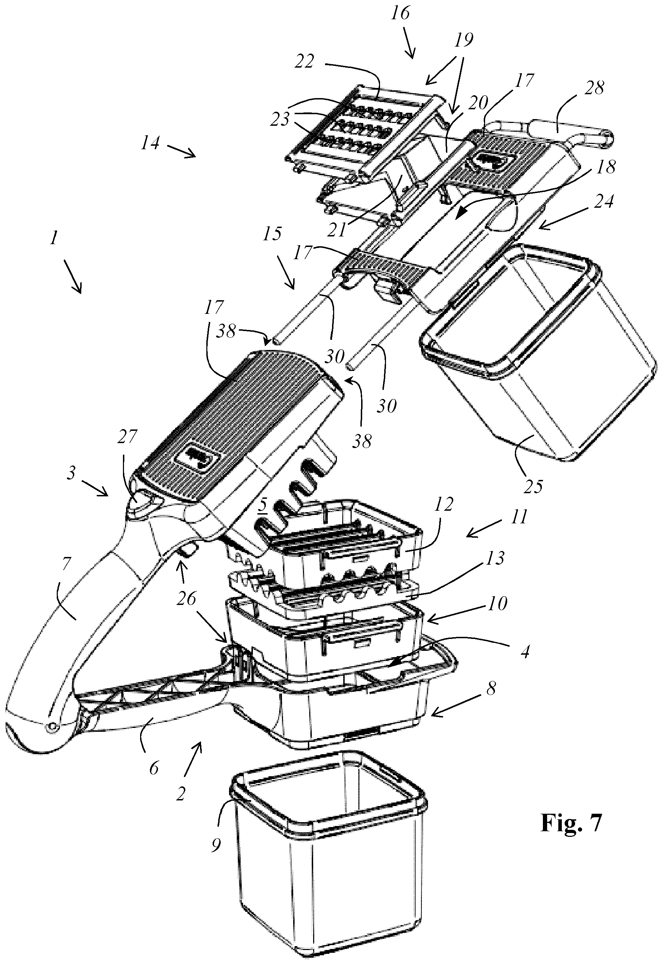

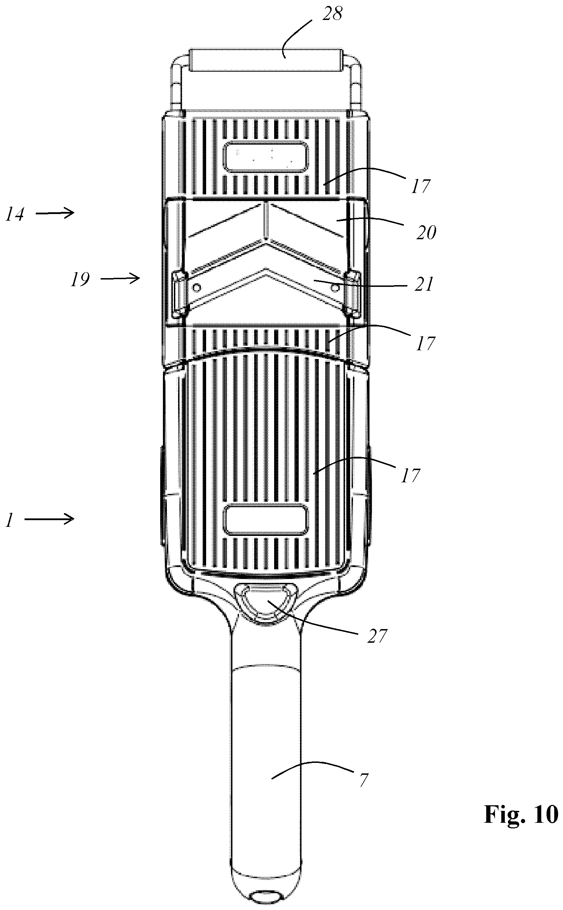

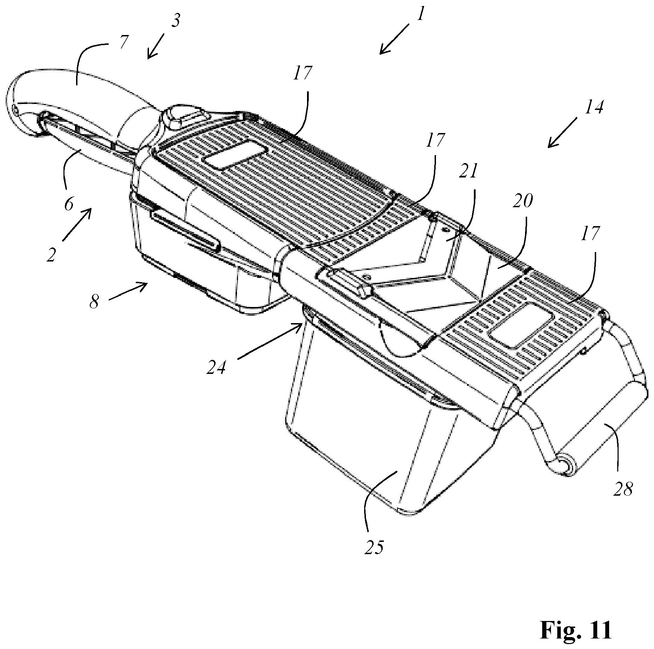

Die Figuren 7 bis 12 zeigen ein zweites Ausführungsbeispiel eines erfindungsgemäßen Lebensmittelzerkleinerungssystems, das eine Lebensmittelzerkleinerungsvorrichtung 1 mit einem Basisteil 2 und einem Betätigungsteil 3 aufweist.

Das Basisteil 2 weist eine Aufnahme 4 für ein Schneidteil 10, 11 auf. Das Betätigungsteil 3 hat einen Pressstempel 5 und ist gelenkig mit dem Basisteil 2 verbunden. Das Betätigungsteil 3 kann zum Hindurchdrücken von zu zerkleinerndem Lebensmittelgut durch das Schneidteil 10, 11 aus einer Einlegestellung gegen das Schneidteil 10, 11 in eine Schließstellung und anschließend von der Schließstellung wieder in die Einlegestellung geschwenkt werden.

Die Lebensmittelzerkleinerungsvorrichtung 1 ist als Handgerät ausgebildet, so dass sie bei einem Zerkleinerungsvorgang, bei dem das Betätigungsteil 3 in die Schließstellung gegen das Basisteil 2 gedrückt wird, in einer Hand oder in zwei Händen gehalten werden kann.

Das Basisteil 2 weist ein erstes Handgriffteil 6 auf, während das Betätigungsteil 3 ein zweites Handgriffteil 7 aufweist. Das erste Handgriffteil 6 und das zweite Handgriffteil 7 können bei einem Zerkleinerungsvorgang mit den Fingern einer Hand gemeinsam umgriffen werden, so dass das erste Handgriffteil 6 und das zweite Handgriffteil 7 zangenartig gegeneinandergedrückt werden können.

Die Lebensmittelzerkleinerungsvorrichtung 1 weist eine Ankoppelvorrichtung 8 zum Ankoppeln eines Behälters 9 auf. Der Behälter 9 kann mittels der Ankoppelvorrichtung 8 derart angekoppelt werden, dass das durch das Schneidteil 10, 11 hindurch gedrückte, zerkleinerte Lebensmittelgut automatisch von dem angekoppelten Behälter 9 aufgefangen wird. Der Behälter 9 kann werkzeugfrei und zerstörungsfrei abgenommen und beispielsweise nach einem Entleerungsvorgang wieder angekoppelt werden. Hierzu weist die Ankoppelvorrichtung 8 eine (nicht näher dargestellte) Rastvorrichtung auf.

Die Lebensmittelzerkleinerungsvorrichtung 1 kann ganz unterschiedliche Schneideinsätze 10, 11 beinhalten.

In dem dargestellten Ausführungsbeispiel kann wahlweise entweder ein Einzel-Schneidteil 10 oder ein Kombinations-Schneidteil 11 in die Aufnahme 4 eingesetzt werden. Es können alternativ oder zusätzlich jedoch auch andersartige Schneideinsätze vorhanden sein.

Der Einzel-Schneidteil 10 weist (in dieser Figur nicht sichtbare) von einem Halterahmen getragene Schneidklingen auf, die sich in einem Mittelpunkt kreuzen. Mit dem Einzel-Schneidteil 10 kann ein Lebensmittelgut in keilförmige Spalten geschnitten werden.

Alternativ kann auch ein Kombinations-Schneidteil 11, der aus einem oberen Teil 12 und einem unteren Teil 13 besteht, in die Aufnahme 4 eingesetzt werden. Der Kombinations-Schneidteil 11 zeichnet sich dadurch aus, dass der obere Teil 12 und der untere Teil 13 jeweils zueinander parallele Schneidklingen aufweisen. Die Schneidklingen des oberen Teils 12 sind parallel zueinander ausgerichtet. Auch die Schneidklingen des unteren Teils 13 sind parallel zueinander ausgerichtet. Sowohl der der obere Teil 12, als auch der untere Teil 13 weisen jeweils einen Halterahmen auf, der die Schneidklingen trägt. Die Halterahmen sind mit Vorsprüngen und Einbuchtungen versehen, die es erlauben, die Halterahmen formschlüssig aufeinander setzten zu können. Auf diese Weise ist verhindert, dass sich die Halterahmen ungewollt gegeneinander verschieben.

Der obere Teil 12 und der untere Teil 13 können zum Schneiden eines Lebensmittelgutes in feine Scheiben mit gleich ausgerichteten Schneidklingen übereinander in der Aufnahme angeordnet werden. Alternativ ist es auch möglich, den oberen Teil 12 und den unteren Teil 13 um 90 Grad zueinander gedreht, also mit einer gekreuzten Anordnung der Schneidklingen, in die Aufnahme einzufügen, um ein Lebensmittelgut in im Querschnitt quadratische Stifte schneiden zu können.

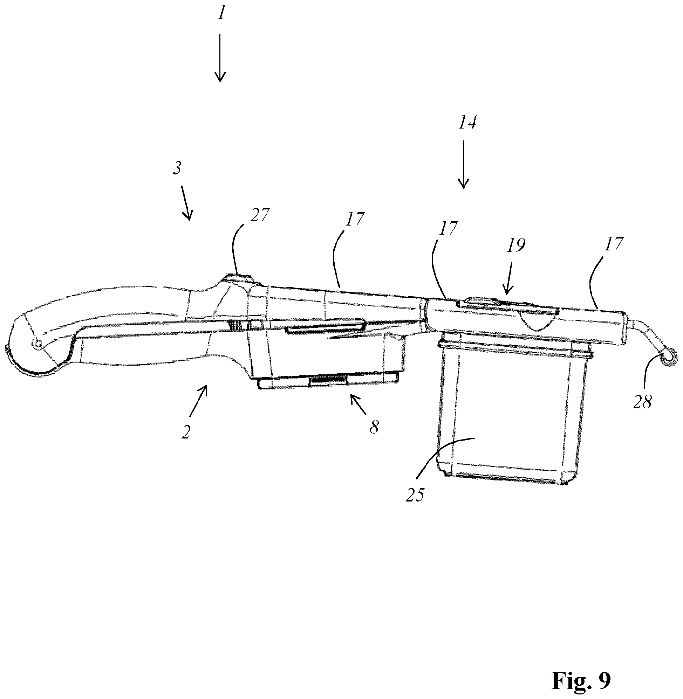

Das Lebensmittelzerkleinerungssystem weist außerdem ein zusätzliches Zerkleinerungswerkzeug 14 auf, das an der Lebensmittelzerkleinerungsvorrichtung 1 in einer (in den Figuren 9, 10, 11 und 12 näher dargestellten) Arbeitsposition festlegbar ist und das einen Befestigungsabschnitt 15 sowie einen Werkzeugabschnitt 16 aufweist.

Der Befestigungsabschnitt 15 beinhaltet zwei längliche Träger 30.

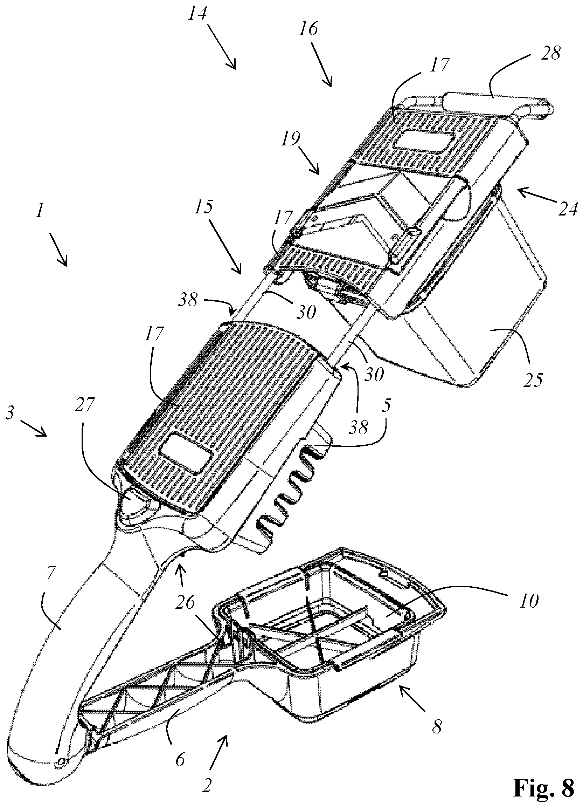

Das Betätigungsteil 3 weist ein Gegenbefestigungsmittel 31 auf, das dazu ausgebildet und bestimmt ist, mit dem Befestigungsabschnitt 15 des zusätzlichen Zerkleinerungswerkzeugs 14 zusammen zu wirken, um das zusätzliche Zerkleinerungswerkzeug 14 in der Arbeitsposition an dem Betätigungsteil 3 festzulegen. Das Gegenbefestigungsmittel 31 besteht aus zwei länglichen Ausnehmungen 38, in die die Träger 30 formschlüssig zum Herbeiführen der Arbeitsposition eingeschoben werden können. Figur 8 zeigt Teile des erfindungsgemäßen Lebensmittelzerkleinerungssystems bei dem Vorgang des Herbeiführens der Arbeitsposition.

Um das zusätzliche Zerkleinerungswerkzeug 14 wieder von der Lebensmittelzerkleinerungsvorrichtung 1 zu lösen, muss der Benutzer lediglich die Träger 30 wieder aus den Ausnehmungen 38 herausziehen.

Die Lebensmittelzerkleinerungsvorrichtung 1 weist eine Arretiervorrichtung 26 auf, mittels der das Basisteil 2 und das Betätigungsteil 3 in der Schließstellung relativ zueinander arretiert werden können. Die Arretiervorrichtung 26 weist einen Bedienknopf 27 auf, mittels dem zwischen einer Arretierstellung und einer Freigabestellung umgeschaltet werden kann. Die Arretiervorrichtung 26 hat den ganz besonderen Vorteil, dass das Basisteil 2 und das Betätigungsteil 3 in der Schließstellung relativ zueinander arretiert werden können, wenn die Lebensmittelzerkleinerungsvorrichtung 1 in einer Schublade verstaut werden soll. Auf diese Weise ist vermieden, dass sich die Lebensmittelzerkleinerungsvorrichtung 1 ungewollt öffnet.

Das zusätzliche Zerkleinerungswerkzeug 14 bildet in der (insbesondere in den Figuren 9 bis 12 dargestellten) Arbeitsposition zusammen mit einem Bauteil der Lebensmittelzerkleinerungsvorrichtung 1 einen Hobel oder eine Reibe. Die Lebensmittelzerkleinerungsvorrichtung 1 stellt einen Teil einer Gleitbahn 17 des Hobels oder der Reibe bereit. Ein weiterer Teil der Gleitbahn 17 ist Bestandteil des Werkzeugabschnitts 16.

Das zusätzliche Zerkleinerungswerkzeug 14 weist im Bereich des Werkzeugabschnitts 16 eine weitere Aufnahme 18 auf, in die ein Schneid- oder Reibeinsatz, insbesondere zerstörungsfrei wieder lösbar und/oder verrastend, eingefügt werden kann. Der Schneid- oder Reibeinsatz 19 kann beispielsweise als Hobeleinsatz 20 ausgebildet sein, der ein Hobelmesser 21 aufweist. Der Schneid- oder Reibeinsatz 19 kann beispielsweise auch als Julienne-Einsatz 22 ausgebildet sein, der eine Vielzahl von Julienne-Messern 23 aufweist. Der Schneid- oder Reibeinsatz kann beispielsweise auch eine Vielzahl von Reibvorsprüngen aufweisen.

In der Arbeitsposition kann ein zu zerkleinerndes Lebensmittelgut entlang der Gleitbahn 17 hin und her bewegt werden, so dass das zu zerkleinerndes Lebensmittelgut fortlaufend immer wieder über den Schneid- oder Reibeinsatz 19 geführt wird und so sukzessive zerkleinert wird.

Das zusätzliche Zerkleinerungswerkzeug 14 weist eine weitere Ankoppelvorrichtung 24 zum Ankoppeln eines weiteren Behälters 25 auf. Der weitere Behälter 25 kann mittels der weiteren Ankoppelvorrichtung 24 derart angekoppelt werden, dass mittels des zusätzlichen Zerkleinerungswerkzeugs 14 zerkleinertes Lebensmittelgut automatisch von dem angekoppelten weiteren Behälter 25 aufgefangen wird. Die weitere Ankoppelvorrichtung 24 ist vorzugsweise derart ausgebildet, dass der weitere Behälter 25 werkzeugfrei und jeweils zerstörungsfrei an- und abgekoppelt werden kann. Hierzu ist vorzugsweise eine Rastvorrichtung vorhanden.

Die Ankoppelvorrichtung 8 und die weitere Ankoppelvorrichtung 24 sind gleich ausgebildet. Ebenso sind der Behälter 9 und der weitere Behälter 25 gleich ausgebildet. Das dargestellte Lebensmittelzerkleinerungssystem hat daher den ganz besonderen Vorteil, dass der Behälter 9 wahlweise auch an der weiteren Ankoppelvorrichtung 24 angekoppelt werden kann und/oder dass der weitere Behälter 25 wahlweise auch an der Ankoppelvorrichtung 8 angekoppelt werden kann. Es ist auch möglich, dass insgesamt nur ein einziger Behälter 9, 25 verwendet wird, wobei dieser in Abhängigkeit davon, ob gerade Lebensmittelgut mittels der Lebensmittelzerkleinerungsvorrichtung 1 oder mittels des zusätzlichen Zerkleinerungswerkzeugs 14 zerkleinert wird, entweder an der Ankoppelvorrichtung 8 oder an der weiteren Ankoppelvorrichtung 24 angekoppelt wird.

Die Figuren 9 bis 11 zeigen in einer Seitenansicht, einer Ansicht von oben und in einer perspektivischen Darstellung die Lebensmittelzerkleinerungsvorrichtung 1 mit dem angekoppelten zusätzlichen Zerkleinerungswerkzeug 14. Es ist deutlich zu erkennen, dass das Betätigungsteil 3 mit seiner Oberseite einen Teil der Gleitbahn 17 bereitstellt, entlang der ein zu zerkleinerndes Lebensmittelgut hin und her geführt werden kann.

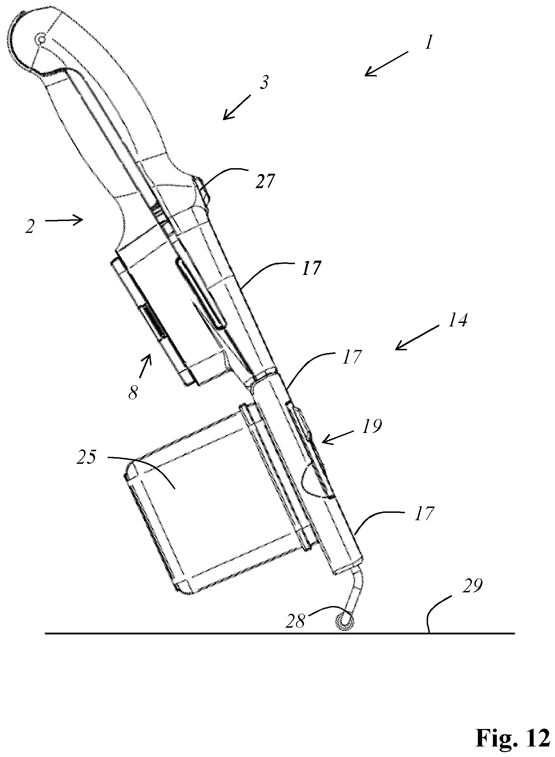

Das zusätzliche Zerkleinerungswerkzeug 14 weist an seinem, dem Befestigungsabschnitt 15 abgewandten Ende einen bügelartig ausgebildeten Aufstellfuß 28 auf, mit dem das Lebensmittelzerkleinerungssystem bei einem Zerkleinerungsvorgang, bei dem ein zu zerkleinerndes Lebensmittelgut mit einer Hand über die Gleitbahn 17 hin- und hergeführt wird, auf einer Arbeitsfläche 29, beispielsweise einer Tischplatte, abgestützt werden kann, während die in der Schließstellung befindliche Lebensmittelzerkleinerungsvorrichtung 1 gleichzeitig mit der anderen Hand frei gehalten wird, was in Figur 12 dargestellt ist.

Das zusätzliche Zerkleinerungswerkzeug 14 ist zerstörungsfrei wieder lösbar an der Lebensmittelzerkleinerungsvorrichtung 1 in einer Arbeitsposition festlegbar, wobei der Werkzeugabschnitt 16 in der Arbeitsposition außerhalb der Aufnahme 4 und außerhalb des Schwenkbereichs des gelenkig mit dem Basisteil 2 verbundenen Betätigungsteils 3 angeordnet ist.

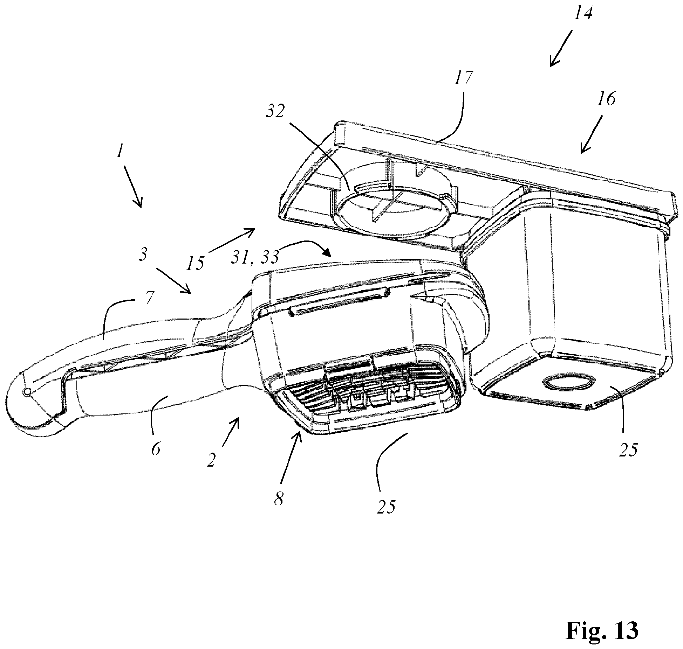

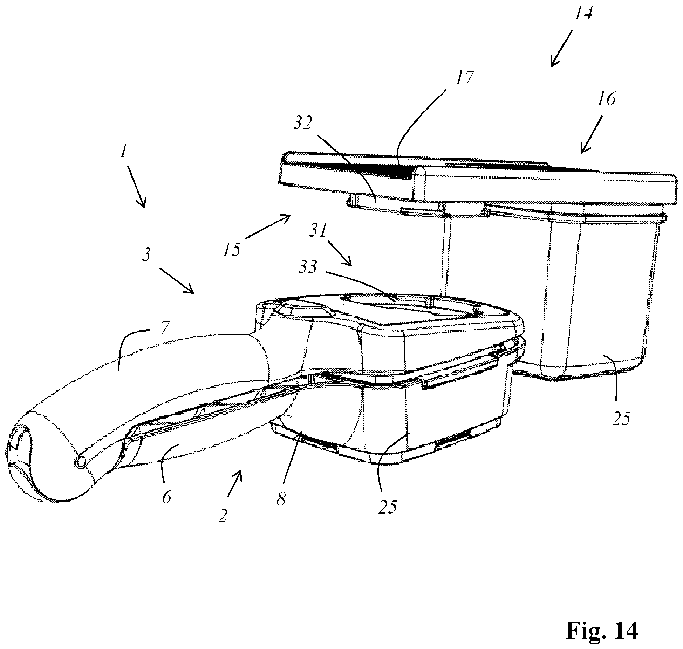

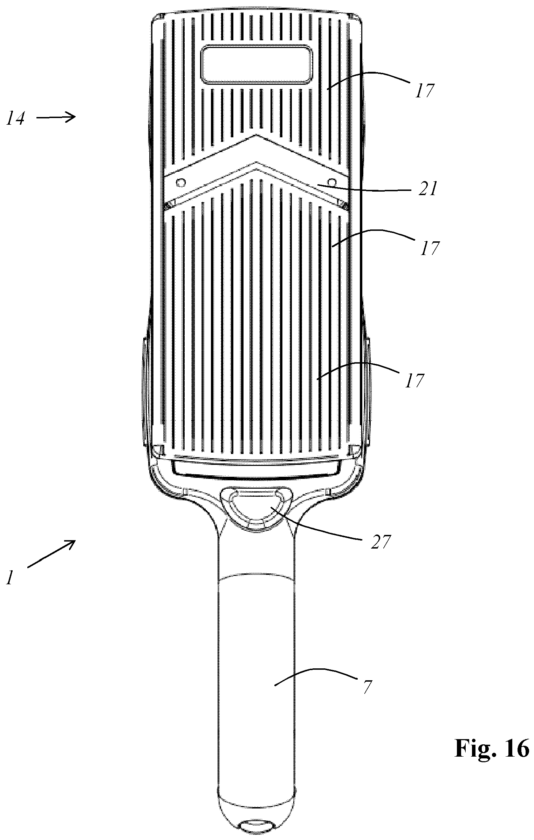

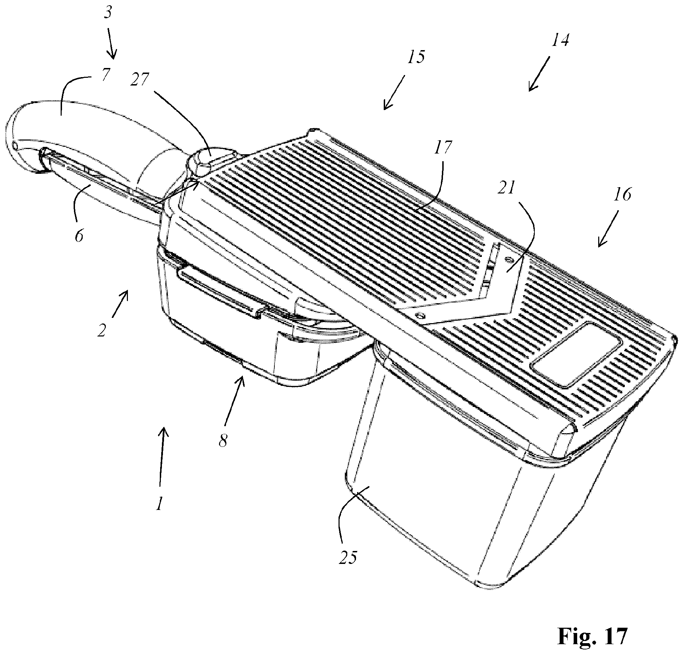

Die Figuren 13 bis 17 zeigen ein drittes Ausführungsbeispiel eines erfindungsgemäßen Lebensmittelzerkleinerungssystems, das eine Lebensmittelzerkleinerungsvorrichtung 1 mit einem Basisteil 2 und einem Betätigungsteil 3 aufweist.

Das Basisteil 2 weist eine Aufnahme 4 für ein (in den Figuren 13 bis 17 nicht sichtbares) Schneidteil 10, 11 auf. Das Betätigungsteil 3 hat einen Pressstempel 5 und ist gelenkig mit dem Basisteil 2 verbunden. Das Betätigungsteil 3 kann zum Hindurchdrücken von zu zerkleinerndem Lebensmittelgut durch das Schneidteil 10, 11 aus einer Einlegestellung gegen das Schneidteil 10, 11 in eine Schließstellung und anschließend von der Schließstellung wieder in die Einlegestellung geschwenkt werden.

Die Lebensmittelzerkleinerungsvorrichtung 1 ist als Handgerät ausgebildet, so dass sie bei einem Zerkleinerungsvorgang, bei dem das Betätigungsteil 3 in die Schließstellung gegen das Basisteil 2 gedrückt wird, in einer Hand oder in zwei Händen gehalten werden kann.

Das Basisteil 2 weist ein erstes Handgriffteil 6 auf, während das Betätigungsteil 3 ein zweites Handgriffteil 7 aufweist. Das erste Handgriffteil 6 und das zweite Handgriffteil 7 können bei einem Zerkleinerungsvorgang mit den Fingern einer Hand gemeinsam umgriffen werden, so dass das erste Handgriffteil 6 und das zweite Handgriffteil 7 zangenartig gegeneinandergedrückt werden können.

Die Lebensmittelzerkleinerungsvorrichtung 1 weist eine Ankoppelvorrichtung 8 zum Ankoppeln eines (in den Figuren 13 bis 17 nicht dargestellten) Behälters 9 auf. Der Behälter 9 kann mittels der Ankoppelvorrichtung 8 derart angekoppelt werden, dass das durch das Schneidteil 10, 11 hindurch gedrückte, zerkleinerte Lebensmittelgut automatisch von dem angekoppelten Behälter 9 aufgefangen wird. Der Behälter 9 kann werkzeugfrei und zerstörungsfrei abgenommen und beispielsweise nach einem Entleerungsvorgang wieder angekoppelt werden. Hierzu weist die Ankoppelvorrichtung 8 eine (nicht näher dargestellte) Rastvorrichtung auf.

Die Lebensmittelzerkleinerungsvorrichtung 1 kann ganz unterschiedliche Schneideinsätze 10, 11 beinhalten.

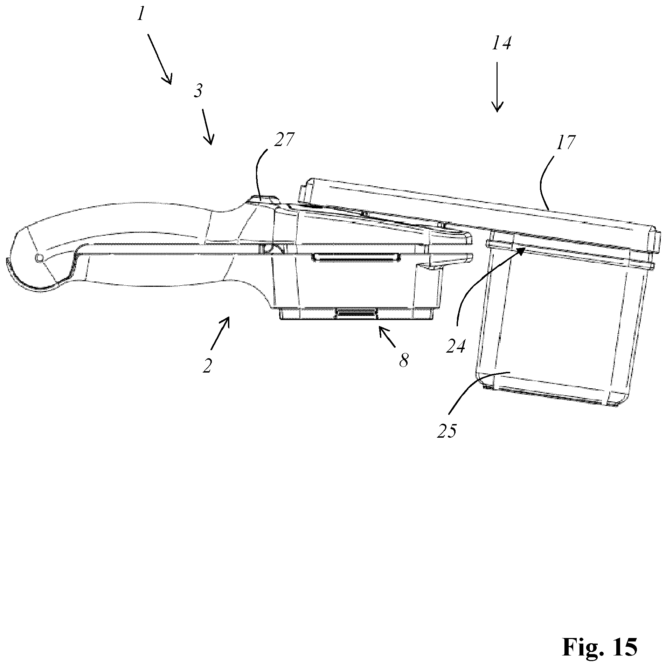

Das Lebensmittelzerkleinerungssystem weist außerdem ein zusätzliches Zerkleinerungswerkzeug 14 auf, das an der Lebensmittelzerkleinerungsvorrichtung 1 in einer (in den Figuren 15, 16 und 17 näher dargestellten) Arbeitsposition festlegbar ist und das einen Befestigungsabschnitt 15 sowie einen Werkzeugabschnitt 16 aufweist.

Das zusätzliche Zerkleinerungswerkzeug 14 ist zerstörungsfrei wieder lösbar an der Lebensmittelzerkleinerungsvorrichtung 1 in einer Arbeitsposition festlegbar, wobei der Werkzeugabschnitt 16 in der Arbeitsposition außerhalb der Aufnahme 4 und außerhalb des Schwenkbereichs des gelenkig mit dem Basisteil 2 verbundenen Betätigungsteils 3 angeordnet ist.

Das Betätigungsteil 3 weist ein Gegenbefestigungsmittel 31 auf, das dazu ausgebildet und bestimmt ist, mit dem Befestigungsabschnitt 15 des zusätzlichen Zerkleinerungswerkzeugs 14 zusammen zu wirken, um das zusätzliche Zerkleinerungswerkzeug 14 in der Arbeitsposition an dem Betätigungsteil 3 festzulegen. Der Befestigungsabschnitt 15 und das Gegenbefestigungsmittel 31 bilden eine Bajonettverbindung.

Zum Herbeiführen der Arbeitsposition wird ein Bajonettvorsprung 32 des Befestigungsabschnitts 15 in eine Bajonettaufnahme 33 des Gegenbefestigungsmittels 31 eingeführt und anschließend eine Drehung um ca. 30 Grad ausgeführt, wodurch eine feste Verbindung hergestellt wird.

Um das zusätzliche Zerkleinerungswerkzeug 14 wieder von der Lebensmittelzerkleinerungsvorrichtung 1 zu lösen, muss der Benutzer das zusätzliche Zerkleinerungswerkzeug 14 wieder relativ zu der Lebensmittelzerkleinerungsvorrichtung 1 um ca. 30 Grad drehen und kann dann den Bajonettvorsprung 32 des Befestigungsabschnitts 15 wieder aus der Bajonettaufnahme 33 des Gegenbefestigungsmittels 31 heraus nehmen.

Die Lebensmittelzerkleinerungsvorrichtung 1 weist eine Arretiervorrichtung 26 auf, mittels der das Basisteil 2 und das Betätigungsteil 3 in der Schließstellung relativ zueinander arretiert werden können. Die Arretiervorrichtung 26 weist einen Bedienknopf 27 auf, mittels dem zwischen einer Arretierstellung und einer Freigabestellung umgeschaltet werden kann. Die Arretiervorrichtung 26 hat den ganz besonderen Vorteil, dass das Basisteil 2 und das Betätigungsteil 3 in der Schließstellung relativ zueinander arretiert werden können, wenn die Lebensmittelzerkleinerungsvorrichtung 1 in einer Schublade verstaut werden soll. Auf diese Weise ist vermieden, dass sich die Lebensmittelzerkleinerungsvorrichtung 1 ungewollt öffnet.

Das zusätzliche Zerkleinerungswerkzeug 14 ist als Hobel mit einer Gleitbahn 17 und einer Hobelklinge 21 ausgebildet.

In der Arbeitsposition kann ein zu zerkleinerndes Lebensmittelgut entlang der Gleitbahn 17 hin und her bewegt werden, so dass das zu zerkleinerndes Lebensmittelgut fortlaufend immer wieder über den Schneid- oder Reibeinsatz 19 geführt wird und so sukzessive zerkleinert wird.

Das zusätzliche Zerkleinerungswerkzeug 14 weist eine weitere Ankoppelvorrichtung 24 zum Ankoppeln eines weiteren Behälters 25 auf. Der weitere Behälter 25 kann mittels der weiteren Ankoppelvorrichtung 24 derart angekoppelt werden, dass mittels des zusätzlichen Zerkleinerungswerkzeugs 14 zerkleinertes Lebensmittelgut automatisch von dem angekoppelten weiteren Behälter 25 aufgefangen wird. Die weitere Ankoppelvorrichtung 24 ist vorzugsweise derart ausgebildet, dass der weitere Behälter 25 werkzeugfrei und jeweils zerstörungsfrei an- und abgekoppelt werden kann. Hierzu ist vorzugsweise eine Rastvorrichtung vorhanden.

Die Ankoppelvorrichtung 8 und die weitere Ankoppelvorrichtung 24 sind gleich ausgebildet. Ebenso sind der Behälter 9 und der weitere Behälter 25 gleich ausgebildet. Das dargestellte Lebensmittelzerkleinerungssystem hat daher den ganz besonderen Vorteil, dass der Behälter 9 wahlweise auch an der weiteren Ankoppelvorrichtung 24 angekoppelt werden kann und/oder dass der weitere Behälter 25 wahlweise auch an der Ankoppelvorrichtung 8 angekoppelt werden kann. Es ist auch möglich, dass insgesamt nur ein einziger Behälter 9, 25 verwendet wird, wobei dieser in Abhängigkeit davon, ob gerade Lebensmittelgut mittels der Lebensmittelzerkleinerungsvorrichtung 1 oder mittels des zusätzlichen Zerkleinerungswerkzeugs 14 zerkleinert wird, entweder an der Ankoppelvorrichtung 8 oder an der weiteren Ankoppelvorrichtung 24 angekoppelt wird.

Die Figuren 15 bis 17 zeigen in einer Seitenansicht, einer Ansicht von oben und in einer perspektivischen Darstellung die Lebensmittelzerkleinerungsvorrichtung 1 mit dem angekoppelten zusätzlichen Zerkleinerungswerkzeug 14.

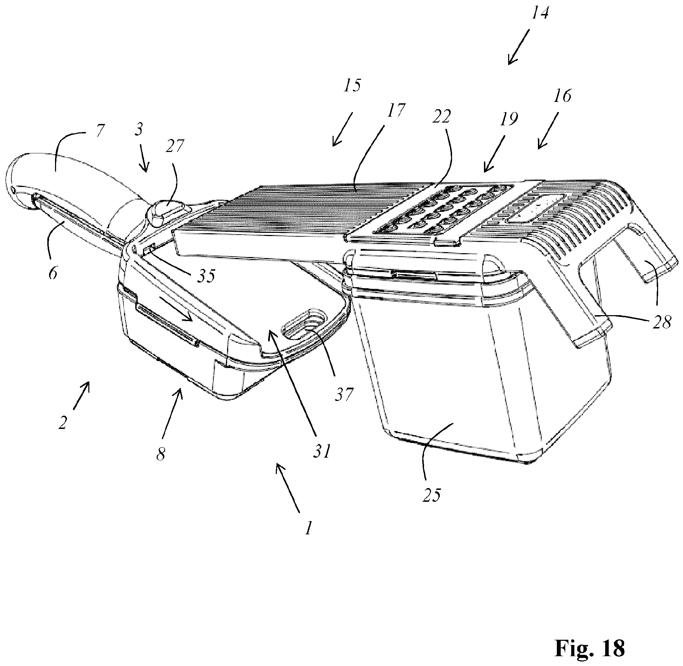

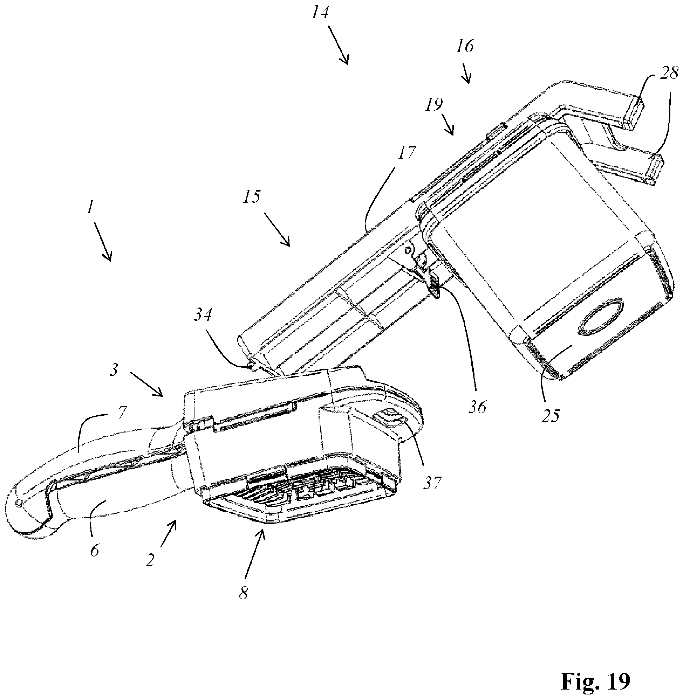

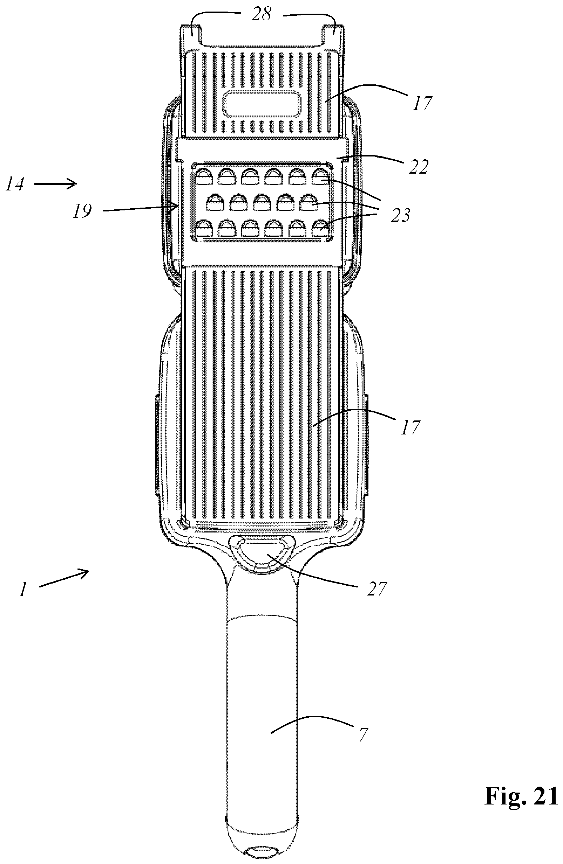

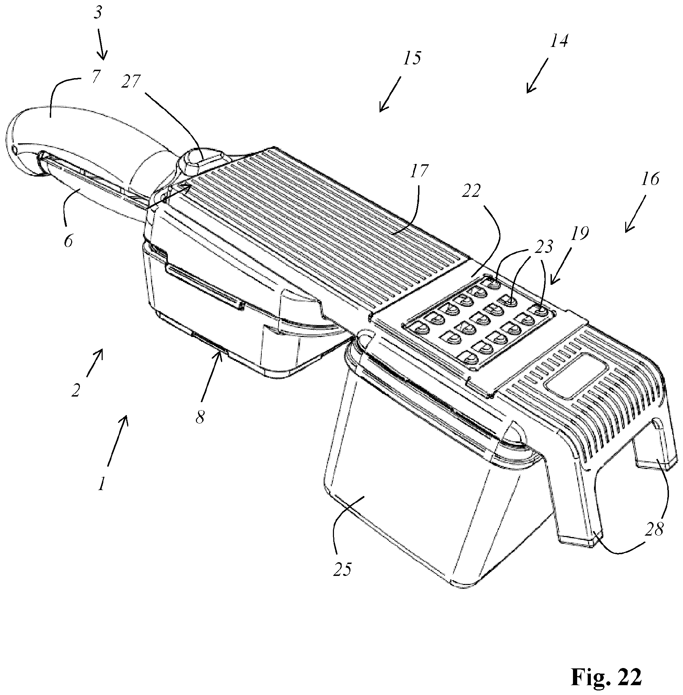

Die Figuren 18 bis 22 zeigen ein viertes Ausführungsbeispiel eines erfindungsgemäßen Lebensmittelzerkleinerungssystems, das eine Lebensmittelzerkleinerungsvorrichtung 1 mit einem Basisteil 2 und einem Betätigungsteil 3 aufweist.

Das Basisteil 2 weist eine Aufnahme 4 für ein (in den Figuren 18 bis 22 nicht sichtbares) Schneidteil 10, 11 auf. Das Betätigungsteil 3 hat einen Pressstempel 5 und ist gelenkig mit dem Basisteil 2 verbunden. Das Betätigungsteil 3 kann zum Hindurchdrücken von zu zerkleinerndem Lebensmittelgut durch das Schneidteil 10, 11 aus einer Einlegestellung gegen das Schneidteil 10, 11 in eine Schließstellung und anschließend von der Schließstellung wieder in die Einlegestellung geschwenkt werden.

Die Lebensmittelzerkleinerungsvorrichtung 1 ist als Handgerät ausgebildet, so dass sie bei einem Zerkleinerungsvorgang, bei dem das Betätigungsteil 3 in die Schließstellung gegen das Basisteil 2 gedrückt wird, in einer Hand oder in zwei Händen gehalten werden kann.

Das Basisteil 2 weist ein erstes Handgriffteil 6 auf, während das Betätigungsteil 3 ein zweites Handgriffteil 7 aufweist. Das erste Handgriffteil 6 und das zweite Handgriffteil 7 können bei einem Zerkleinerungsvorgang mit den Fingern einer Hand gemeinsam umgriffen werden, so dass das erste Handgriffteil 6 und das zweite Handgriffteil 7 zangenartig gegeneinandergedrückt werden können.

Die Lebensmittelzerkleinerungsvorrichtung 1 weist eine Ankoppelvorrichtung 8 zum Ankoppeln eines (in den Figuren 18 bis 22 nicht dargestellten) Behälters 9 auf. Der Behälter 9 kann mittels der Ankoppelvorrichtung 8 derart angekoppelt werden, dass das durch das Schneidteil 10, 11 hindurch gedrückte, zerkleinerte Lebensmittelgut automatisch von dem angekoppelten Behälter 9 aufgefangen wird. Der Behälter 9 kann werkzeugfrei und zerstörungsfrei abgenommen und beispielsweise nach einem Entleerungsvorgang wieder angekoppelt werden. Hierzu weist die Ankoppelvorrichtung 8 eine (nicht näher dargestellte) Rastvorrichtung auf.

Die Lebensmittelzerkleinerungsvorrichtung 1 kann ganz unterschiedliche Schneideinsätze 10, 11 beinhalten.

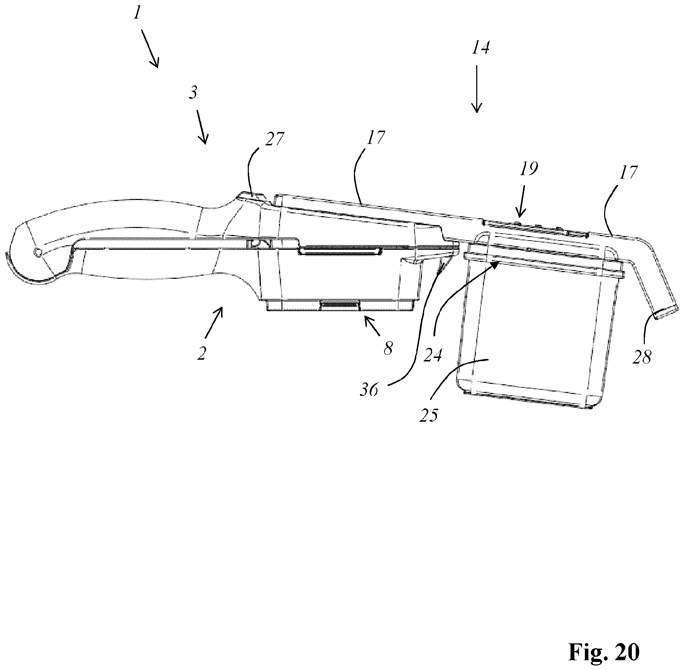

Das Lebensmittelzerkleinerungssystem weist außerdem ein zusätzliches Zerkleinerungswerkzeug 14 auf, das an der Lebensmittelzerkleinerungsvorrichtung 1 in einer (in den Figuren 20, 21 und 22 näher dargestellten) Arbeitsposition festlegbar ist und das einen Befestigungsabschnitt 15 sowie einen Werkzeugabschnitt 16 aufweist.

Das zusätzliche Zerkleinerungswerkzeug 14 ist zerstörungsfrei wieder lösbar an der Lebensmittelzerkleinerungsvorrichtung 1 in einer Arbeitsposition festlegbar, wobei der Werkzeugabschnitt 16 in der Arbeitsposition außerhalb der Aufnahme 4 und außerhalb des Schwenkbereichs des gelenkig mit dem Basisteil 2 verbundenen Betätigungsteils 3 angeordnet ist.

Das Betätigungsteil 3 weist ein Gegenbefestigungsmittel 31 auf, das dazu ausgebildet und bestimmt ist, mit dem Befestigungsabschnitt 15 des zusätzlichen Zerkleinerungswerkzeugs 14 zusammen zu wirken, um das zusätzliche Zerkleinerungswerkzeug 14 in der Arbeitsposition an dem Betätigungsteil 3 festzulegen. Der Befestigungsabschnitt 15 und das Gegenbefestigungsmittel 31 bilden bei diesem Ausführungsbeispiel eine Rastverbindung. Hierzu weist der Befestigungsabschnitt 15 zwei Vorsprünge 34 auf, die schräg von oben kommend in Ausnehmungen 35 des Gegenbefestigungsmittels 31 eingesteckt werden. Anschließend wird das zusätzliche Zerkleinerungswerkzeug 14 um das Ende, das die eingesteckten Vorsprünge 34 aufweist, gegen das Gegenbefestigungsmittels 31 geschwenkt, so dass eine Rastnase 36 in Eingriff mit einer Rastöffnung 37 gelangt, wodurch eine feste Verbindung hergestellt wird.

Um das zusätzliche Zerkleinerungswerkzeug 14 wieder von der Lebensmittelzerkleinerungsvorrichtung 1 zu lösen, muss der Benutzer die Rastnase 36 aus der Rastöffnung 37 lösen und kann dann das zusätzliche Zerkleinerungswerkzeug 14 wieder von der Lebensmittelzerkleinerungsvorrichtung labnehmen.

Die Lebensmittelzerkleinerungsvorrichtung 1 weist eine Arretiervorrichtung 26 auf, mittels der das Basisteil 2 und das Betätigungsteil 3 in der Schließstellung relativ zueinander arretiert werden können. Die Arretiervorrichtung 26 weist einen Bedienknopf 27 auf, mittels dem zwischen einer Arretierstellung und einer Freigabestellung umgeschaltet werden kann. Die Arretiervorrichtung 26 hat den ganz besonderen Vorteil, dass das Basisteil 2 und das Betätigungsteil 3 in der Schließstellung relativ zueinander arretiert werden können, wenn die Lebensmittelzerkleinerungsvorrichtung 1 in einer Schublade verstaut werden soll. Auf diese Weise ist vermieden, dass sich die Lebensmittelzerkleinerungsvorrichtung 1 ungewollt öffnet.

Das zusätzliche Zerkleinerungswerkzeug 14 ist, je nach verwendetem Schneid- oder Reibeinsatz 19, als Hobel oder Reibe mit einer Gleitbahn 17 ausgebildet.

Das zusätzliche Zerkleinerungswerkzeug 14 weist im Bereich des Werkzeugabschnitts 16 eine weitere Aufnahme 18 auf, in die ein Schneid- oder Reibeinsatz, insbesondere zerstörungsfrei wieder lösbar und/oder verrastend, eingefügt werden kann. Der Schneid- oder Reibeinsatz 19 kann beispielsweise als Hobeleinsatz 20 ausgebildet sein, der ein Hobelmesser 21 aufweist. Der Schneid- oder Reibeinsatz 19 kann beispielsweise auch als Julienne-Einsatz 22 ausgebildet sein, der eine Vielzahl von Julienne-Messern 23 aufweist. Der Schneid- oder Reibeinsatz kann beispielsweise auch eine Vielzahl von Reibvorsprüngen aufweisen.

In der Arbeitsposition kann ein zu zerkleinerndes Lebensmittelgut entlang der Gleitbahn 17 hin und her bewegt werden, so dass das zu zerkleinerndes Lebensmittelgut fortlaufend immer wieder über den Schneid- oder Reibeinsatz 19 geführt wird und so sukzessive zerkleinert wird.

Das zusätzliche Zerkleinerungswerkzeug 14 weist eine weitere Ankoppelvorrichtung 24 zum Ankoppeln eines weiteren Behälters 25 auf. Der weitere Behälter 25 kann mittels der weiteren Ankoppelvorrichtung 24 derart angekoppelt werden, dass mittels des zusätzlichen Zerkleinerungswerkzeugs 14 zerkleinertes Lebensmittelgut automatisch von dem angekoppelten weiteren Behälter 25 aufgefangen wird. Die weitere Ankoppelvorrichtung 24 ist vorzugsweise derart ausgebildet, dass der weitere Behälter 25 werkzeugfrei und jeweils zerstörungsfrei an- und abgekoppelt werden kann. Hierzu ist vorzugsweise eine Rastvorrichtung vorhanden.

Die Ankoppelvorrichtung 8 und die weitere Ankoppelvorrichtung 24 sind gleich ausgebildet. Ebenso sind der Behälter 9 und der weitere Behälter 25 gleich ausgebildet. Das dargestellte Lebensmittelzerkleinerungssystem hat daher den ganz besonderen Vorteil, dass der Behälter 9 wahlweise auch an der weiteren Ankoppelvorrichtung 24 angekoppelt werden kann und/oder dass der weitere Behälter 25 wahlweise auch an der Ankoppelvorrichtung 8 angekoppelt werden kann. Es ist auch möglich, dass insgesamt nur ein einziger Behälter 9, 25 verwendet wird, wobei dieser in Abhängigkeit davon, ob gerade Lebensmittelgut mittels der Lebensmittelzerkleinerungsvorrichtung 1 oder mittels des zusätzlichen Zerkleinerungswerkzeugs 14 zerkleinert wird, entweder an der Ankoppelvorrichtung 8 oder an der weiteren Ankoppelvorrichtung 24 angekoppelt wird.

Die Figuren 20 bis 22 zeigen in einer Seitenansicht, einer Ansicht von oben und in einer perspektivischen Darstellung die Lebensmittelzerkleinerungsvorrichtung 1 mit dem angekoppelten zusätzlichen Zerkleinerungswerkzeug 14.

Das zusätzliche Zerkleinerungswerkzeug 14 weist an seinem, dem Befestigungsabschnitt 15 abgewandten Ende zwei Aufstellfüße 28 auf, mit denen das Lebensmittelzerkleinerungssystem bei einem Zerkleinerungsvorgang, bei dem ein zu zerkleinerndes Lebensmittelgut mit einer Hand über die Gleitbahn 17 hin- und hergeführt wird, auf einer Arbeitsfläche 29, beispielsweise einer Tischplatte, abgestützt werden kann, während die in der Schließstellung befindliche Lebensmittelzerkleinerungsvorrichtung 1 gleichzeitig mit der anderen Hand frei gehalten wird.

### Bezugszeichenliste:

- 1: Lebensmittelzerkleinerungsvorrichtung
- 2: Basisteil
- 3: Betätigungsteil
- 4: Aufnahme
- 5: Pressstempel
- 6: erstes Handgriffteil
- 7: zweites Handgriffteil
- 8: Ankoppelvorrichtung
- 9: Behälter
- 10: Einzel-Schneidteil
- 11: Kombinations- Schneidteil
- 12: oberer Teil des Kombinations- Schneidteils 11
- 13: unterer Teil des Kombinations- Schneidteils 11
- 14: zusätzliches Zerkleinerungswerkzeug
- 15: Befestigungsabschnitt
- 16: Werkzeugabschnitt
- 17: Gleitbahn
- 18: weitere Aufnahme
- 19: Schneid- oder Reibeinsatz
- 20: Hobeleinsatz
- 21: Hobelmesser
- 22: Julienne-Einsatz
- 23: Julienne-Messer
- 24: weitere Ankoppelvorrichtung
- 25: weiterer Behälter
- 26: Arretiervorrichtung
- 27: Bedienknopf
- 28: Aufstellfuß
- 29: Arbeitsfläche
- 30: Träger
- 31: Gegenbefestigungsmittel
- 32: Bajonettvorsprung
- 33: Bajonettaufnahme
- 34: Vorsprung
- 35: Ausnehmung
- 36: Rastnase
- 37: Rastöffnung
- 38: Längliche Ausnehmung

## Patentansprüche

1. Lebensmittelzerkleinerungssystem aufweisend eine als Handgerät ausgebildete Lebensmittelzerkleinerungsvorrichtung (1) mit einem Basisteil (2), das eine Aufnahme (4) für ein Schneidteil aufweist, und mit einem gelenkig mit dem Basisteil (2) verbundenen Betätigungsteil (3), das zum Hindurchdrücken von zu zerkleinerndem Lebensmittelgut durch ein in die Aufnahme (4) eingesetztes Schneidteil aus einer Einlegestellung gegen das Schneidteil in eine Schließstellung und anschließend von der Schließstellung wieder in die Einlegestellung schwenkbar ist, **gekennzeichnet durch** ein zusätzliches Zerkleinerungswerkzeug (14), das
a. zerstörungsfrei wieder lösbar an der Lebensmittelzerkleinerungsvorrichtung (1) in einer Arbeitsposition festlegbar ist und das
b. einen Befestigungsabschnitt (15) sowie einen Werkzeugabschnitt (16) aufweist, wobei der Werkzeugabschnitt (16) in der Arbeitsposition außerhalb der Aufnahme (4) und außerhalb des Schwenkbereichs des Betätigungsteils (3) angeordnet ist.

2. Lebensmittelzerkleinerungssystem nach Anspruch 1, **dadurch gekennzeichnet, dass** das Betätigungsteil (3) oder das Basisteil (2) ein Gegenbefestigungsmittel (31) aufweist, das dazu ausgebildet und bestimmt ist, mit dem Befestigungsabschnitt (15) des zusätzlichen Zerkleinerungswerkzeugs (14) zusammen zu wirken, um das zusätzliche Zerkleinerungswerkzeug (14) in der Arbeitsposition an dem Betätigungsteil (3) oder an dem Basisteil (2) festzulegen.

3. Lebensmittelzerkleinerungssystem nach Anspruch 2, **dadurch gekennzeichnet, dass**
a. der Befestigungsabschnitt (15) und das Gegenbefestigungsmittel (31) eine Bajonettverbindung bilden, und/oder dass
b. das Gegenbefestigungsmittel (31) auf der dem Basisteil (2) abgewandten Außenseite des Betätigungsteils (3) angeordnet ist.

4. Lebensmittelzerkleinerungssystem nach Anspruch 2, **dadurch gekennzeichnet, dass** das Gegenbefestigungsmittel (31) wenigstens eine, insbesondere längliche, Ausnehmung (35) aufweist und dass der Befestigungsabschnitt (15) wenigstens einen, insbesondere länglichen, Träger (30), insbesondere zwei längliche Träger (30), aufweist, der dazu ausgebildet und bestimmt ist, formschlüssig in die Ausnehmung (35) eingeführt zu werden, um das zusätzliche Zerkleinerungswerkzeug (14) in der Arbeitsposition festzulegen.

5. Lebensmittelzerkleinerungssystem nach Anspruch 1, **dadurch gekennzeichnet, dass**
a. der Befestigungsabschnitt (15) in der Arbeitsposition formschlüssig zwischen dem Basisteil (2) und dem Betätigungsteil (3) eingeklemmt ist, oder dass
b. der Befestigungsabschnitt (15) in der Arbeitsposition formschlüssig zwischen dem Basisteil (2) und dem Betätigungsteil (3) eingeklemmt ist und dass der Befestigungsabschnitt (15), insbesondere formschlüssig und/oder verrastend, in die Aufnahme (4) einfügbar ist, oder dass
c. der Befestigungsabschnitt (15) in der Arbeitsposition formschlüssig zwischen dem Basisteil (2) und dem Betätigungsteil (3) eingeklemmt ist und dass der Befestigungsabschnitt (15) anstelle des Schneidteils, insbesondere formschlüssig und/oder verrastend, in die Aufnahme (4) einfügbar ist.

6. Lebensmittelzerkleinerungssystem nach einem der Ansprüche 1 bis 5, **dadurch gekennzeichnet, dass**
a. das Betätigungsteil (3) einen dem Basisteil (2) zugewandten Pressstempel (5) aufweist, oder dass
b. das Betätigungsteil (3) einen dem Basisteil (2) zugewandten Pressstempel (5) aufweist und dass der Befestigungsabschnitt (15) einen, insbesondere in die Aufnahme (4) einfügbaren, Rahmen aufweist, in den der Pressstempel (5) in der Arbeitsposition, insbesondere formschlüssig, eingreift.

7. Lebensmittelzerkleinerungssystem nach einem der Ansprüche 1 bis 6, **dadurch gekennzeichnet, dass** das zusätzliche Zerkleinerungswerkzeug (14) an der Lebensmittelzerkleinerungsvorrichtung (1) festlegbar ist, ohne dass das Basisteil (2) und/oder das Betätigungsteil (3) hierfür zuvor verändert oder voneinander getrennt werden müssen.

8. Lebensmittelzerkleinerungssystem nach einem der Ansprüche 1 bis 7, **dadurch gekennzeichnet, dass**
a. das zusätzliche Zerkleinerungswerkzeug (14) als Hobel oder als Reibe ausgebildet ist oder dass
b. das zusätzliche Zerkleinerungswerkzeug (14) in der Arbeitsposition zusammen mit wenigstens einem Bauteil der Lebensmittelzerkleinerungsvorrichtung (1) einen Hobel oder eine Reibe bildet.

9. Lebensmittelzerkleinerungssystem nach Anspruch 8, **dadurch gekennzeichnet, dass**
a. die Lebensmittelzerkleinerungsvorrichtung (1) eine Gleitbahn (17) oder wenigstens einen Teil der Gleitbahn (17) des Hobels oder der Reibe bereitstellt, entlang der ein mittels des Hobels oder der Reibe zu zerkleinerndes Lebensmittelgut hin und her führbar ist, oder dass
b. die Lebensmittelzerkleinerungsvorrichtung (1) eine Gleitbahn (17) oder wenigstens einen Teil der Gleitbahn (17) des Hobels oder der Reibe bereitstellt, entlang der ein mittels des Hobels oder der Reibe zu zerkleinerndes Lebensmittelgut hin und her führbar ist, wobei eine, insbesondere von dem Basisteil (2) abgewandte, Außenseite des Betätigungsteils (3) die Gleitbahn (17) oder den Teil der Gleitbahn (17) aufweist.

10. Lebensmittelzerkleinerungssystem nach einem der Ansprüche 7 bis 9, **dadurch gekennzeichnet, dass**
a. das zusätzliche Zerkleinerungswerkzeug (14) eine weitere Aufnahme (18) aufweist, in die ein Schneid- oder Reibeinsatz, insbesondere zerstörungsfrei wieder lösbar und/oder verrastend, einfügbar ist, oder dass
b. das zusätzliche Zerkleinerungswerkzeug (14) eine weitere Aufnahme (18) aufweist, in die ein Schneid- oder Reibeinsatz, insbesondere zerstörungsfrei wieder lösbar und/oder verrastend, einfügbar ist, wobei der Schneid- oder Reibeinsatz wenigsten ein, insbesondere genau ein, Hobelmesser, oder mehrere Julienne-Messer oder mehrere Reibvorsprünge aufweist, oder dass
c. das zusätzliche Zerkleinerungswerkzeug (14) eine weitere Aufnahme (18) aufweist, in die ein Schneid- oder Reibeinsatz, insbesondere zerstörungsfrei wieder lösbar und/oder verrastend, einfügbar ist, wobei das Lebensmittelzerkleinerungssystem mehrere unterschiedliche Schneid- oder Reibeinsätze aufweist, die wahlweise in die weitere Aufnahme (18) einfügbar sind.

11. Lebensmittelzerkleinerungssystem nach einem der Ansprüche 1 bis 10, **dadurch gekennzeichnet, dass**
a. die Lebensmittelzerkleinerungsvorrichtung (1) eine Ankoppelvorrichtung (8) zum Ankoppeln eines Behälters (9) aufweist, oder dass
b. die Lebensmittelzerkleinerungsvorrichtung (1) eine Ankoppelvorrichtung (8) zum Ankoppeln eines Behälters (9) aufweist, wobei ein Behälter (9) mittels der Ankoppelvorrichtung (8) derart ankoppelbar ist, dass mittels der Lebensmittelzerkleinerungsvorrichtung (1) zerkleinertes Lebensmittelgut automatisch von dem angekoppelten Behälter (9) aufgefangen wird.

12. Lebensmittelzerkleinerungssystem nach einem der Ansprüche 1 bis 11, **dadurch gekennzeichnet, dass**
a. das zusätzliche Zerkleinerungswerkzeug (14) eine weitere Ankoppelvorrichtung (24) zum Ankoppeln eines Behälters (9) aufweist, oder dass
b. das zusätzliche Zerkleinerungswerkzeug (14) eine weitere Ankoppelvorrichtung (24) zum Ankoppeln eines Behälters (9) aufweist, wobei ein Behälter (9) mittels der weiteren Ankoppelvorrichtung (24) derart ankoppelbar ist, dass mittels des zusätzlichen Zerkleinerungswerkzeugs (14) zerkleinertes Lebensmittelgut automatisch von dem angekoppelten Behälter (9) aufgefangen wird.

13. Lebensmittelzerkleinerungssystem nach Anspruch 11 und Anspruch 12, **dadurch gekennzeichnet, dass**
a. die Ankoppelvorrichtung (8) und die weitere Ankoppelvorrichtung (24) gleich ausgebildet sind, oder dass
b. die Ankoppelvorrichtung (8) und die weitere Ankoppelvorrichtung (24) gleich ausgebildet sind und dass wenigstens ein Behälter (9) vorhanden ist, der wahlweise mittels der Ankoppelvorrichtung (8) an die Lebensmittelzerkleinerungsvorrichtung (1) oder mittels der weiteren Ankoppelvorrichtung (24) an das zusätzliche Zerkleinerungswerkzeug (14) ankoppelbar ist.

14. Lebensmittelzerkleinerungssystem nach einem der Ansprüche 1 bis 13, **dadurch gekennzeichnet, dass**
a. die als Handgerät ausgebildete Lebensmittelzerkleinerungsvorrichtung (1) dazu ausgebildet und bestimmt ist, bei einem Zerkleinerungsvorgang, insbesondere ohne Abstellen auf einer Arbeitsfläche, in der Hand oder in den Händen gehalten zu werden, oder dass
b. die als Handgerät ausgebildete Lebensmittelzerkleinerungsvorrichtung (1) dazu ausgebildet und bestimmt ist, bei einem Zerkleinerungsvorgang, insbesondere ohne Abstellen auf einer Arbeitsfläche, in der Hand oder in den Händen gehalten zu werden, wobei das Basisteil ein erstes Handgriffteil (6) aufweist und das Betätigungsteil (3) ein zweites Handgriffteil (7) aufweist, die beide mit den Fingern einer Hand gemeinsam umgreifbar und, insbesondere zangenartig, gegeneinander drückbar angeordnet sind.

15. Lebensmittelzerkleinerungssystem nach einem der Ansprüche 1 bis 14, **dadurch gekennzeichnet, dass** das zusätzliche Zerkleinerungswerkzeug (14) einen Aufstellfuß (28) aufweist, mittels dem das zusätzliche Zerkleinerungswerkzeug (14) bei einem Zerkleinerungsvorgang, bei dem ein zu zerkleinerndes Lebensmittelgut mit einer Hand über die Gleitbahn (17) hin- und hergeführt wird, an einer Arbeitsfläche abgestützt werden kann, während die in der Schließstellung befindliche Lebensmittelzerkleinerungsvorrichtung (1) gleichzeitig mit der anderen Hand frei gehalten wird.
